# EUROPEAN PATENT APPLICATION

(11) **EP 4 761 436 A1**
(43) Date of publication of application: **17.06.2026**
(21) Application number: 24850962.2
(22) Date of filing: 05.08.2024
(51) Int. Cl.: H04W 72/25

(54) **INFORMATION TRANSMISSION METHOD AND APPARATUS, DEVICE, AND MEDIUM**

(30) Priority: 10.08.2023 CN 202311008292
(71) Applicant: Datang Mobile Communications Equipment Co., Ltd., Beijing 100085 (CN)
(72) Inventor: REN, Xiaotao, Beijing 100085 (CN); REN, Bin, Beijing 100085 (CN)
(74) Representative: Studio Torta S.p.A.
(86) International application number: PCT/CN2024/109785
(87) International publication number: WO 2025/031317

(57) **Abstract**

This disclosure provides an information transmission method and apparatus, device, and medium. The method includes: sending first control information to a second terminal, the first control information including at least one of the following: first indication information for indicating a type of a second-level sidelink control information (SCI); second indication information for indicating a relative relationship between a time-domain location of an SL-PRS resource and a time-domain location of a physical sidelink shared channel (PSSCH); third indication information for indicating that the second-level SCI contains the time-domain location of the SL-PRS resource or indicating that the second-level SCI contains the time-domain location of the PSSCH; fourth indication information for indicating the time-domain location of the SL-PRS resource; fifth indication information for indicating a time-domain location of a PSSCH in the same slot as the SL-PRS resource; or sixth indication information for indicating an index of the SL-PRS resource.

## Description

### CROSS-REFERENCE TO RELATED APPLICATION

This application claims priority to Chinese Patent Application No. 202311008292.9, filed on August 10, 2023, and entitled "information transmission method and apparatus, device, and medium", disclosure of which is incorporated herein by reference in its entirety.

### TECHNICAL FIELD

This disclosure relates to the field of communication technology, and in particular to an information transmission method and apparatus, device and medium.

### BACKGROUND

In existing New Radio (NR) positioning technologies, downlink positioning reference signal and uplink positioning reference signal are defined for the air interface between the base station and the terminal to complete terminal positioning based on the downlink or uplink positioning reference signal. Considering the need for relative positioning between terminals, i.e., sidelink positioning, the sidelink positioning reference signal (SL-PRS) transmitted between terminals is also introduced. This allows terminals to complete the relative positioning between the terminals directly using the SL-PRS, without relying on downlink or uplink positioning reference signal.

There is currently no technical solution for ensuring that the terminal correctly receives the SL-PRS when the SL-PRS is transmitted in the shared resource pool, so as to complete the sidelink positioning.

### SUMMARY

This disclosure aims to provide an information transmission method and apparatus, device, and medium to solve the problem of how to enable the terminal to correctly receive the SL-PRS when the SL-PRS is transmitted in a shared resource pool.

To achieve the above objective, in a first aspect, an embodiment of this disclosure provides an information transmission method performed by a first communication device, including:
sending first control information to a second terminal, wherein the first control information includes at least one of the following:
first indication information for indicating a type of second-level sidelink control information (SCI);
second indication information for indicating a relative relationship between a time-domain location of a sidelink positioning reference signal (SL-PRS) resource and a time-domain location of a physical sidelink shared channel (PSSCH);
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

In some embodiments, the first indication information is a reserved field value of a first field in first-level SCI, the first field being used for indicating a format of the second-level SCI; or,
the first indication information is a reserved bit in a first format, the first format being an existing format of the second-level SCI.

In some embodiments, in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

In some embodiments, the second-level SCI is used for indicating SL-PRS resource information.

In some embodiments, the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

In some embodiments, the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

In some embodiments, the fifth indication information is used for indicating:
an index of a last OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

In some embodiments, the index of the SL-PRS resource has a one-to-one correspondence with at least one of the following:
a quantity of OFDM symbols occupied by the SL-PRS resource;
an index of a first OFDM symbol occupied by the SL-PRS resource;
an index of a last OFDM symbol occupied by the SL-PRS resource; or
an offset between the first OFDM symbol occupied by the SL-PRS resource and a last OFDM symbol occupied by the PSSCH.

In some embodiments, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

In some embodiments, the first control information is carried by at least one of the following:
first-level SCI;
the second-level SCI;
downlink control information (DCI);
radio resource control (RRC) signaling; or
sidelink positioning protocol (SLPP) signaling.

In a second aspect, an embodiment of this disclosure further provides an information transmission method, performed by a second terminal, including:
receiving first control information sent by a first communication device; and
receiving, according to the first control information, a sidelink positioning reference signal (SL-PRS) and/or a physical sidelink shared channel (PSSCH) sent by a first terminal;
wherein the first control information includes at least one of the following:
   first indication information for indicating a type of second-level sidelink control information (SCI);
   second indication information for indicating a relative relationship between a time-domain location of an SL-PRS resource and a time-domain location of the PSSCH;
   third indication information for indicating that the second-level SCI contains the time-domain location of the SL-PRS resource or indicating that the second-level SCI contains the time-domain location of the PSSCH;
   fourth indication information for indicating the time-domain location of the SL-PRS resource;
   fifth indication information for indicating a time-domain location of a PSSCH in the same slot as the SL-PRS resource; or
   sixth indication information for indicating an index of the SL-PRS resource, wherein the index of the SL-PRS resource is used for indicating the time-domain location of the SL-PRS resource.

In some embodiments, the first indication information is a reserved field value of a first field in first-level SCI, the first field being used for indicating a format of the second-level SCI; or,
the first indication information is a reserved bit in a first format, the first format being an existing format of the second-level SCI.

In some embodiments, in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

In some embodiments, the second-level SCI is used for indicating SL-PRS resource information.

In some embodiments, the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

In some embodiments, the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

In some embodiments, the fifth indication information is used for indicating:
an index of a last OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

In some embodiments, the index of the SL-PRS resource has a one-to-one correspondence with at least one of the following:
a quantity of OFDM symbols occupied by the SL-PRS resource;
an index of a first OFDM symbol occupied by the SL-PRS resource;
an index of a last OFDM symbol occupied by the SL-PRS resource; or
an offset between the first OFDM symbol occupied by the SL-PRS resource and a last OFDM symbol occupied by the PSSCH.

In some embodiments, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

In some embodiments, receiving the first control information sent by the first communication device includes:
receiving the first control information sent by the first communication device through at least one of the following:
first-level SCI;
the second-level SCI;
downlink control information (DCI);
radio resource control (RRC) signaling; or
sidelink positioning protocol (SLPP) signaling.

In some embodiments, the first control information includes the first indication information;
the receiving, according to the first control information, the SL-PRS sent by the first terminal includes:
determining a type of the second-level SCI based on the first indication information;
determining a time-domain location of the SL-PRS resource based on the type of the second-level SCI; and
receiving, based on the time-domain location of the SL-PRS resource, the SL-PRS sent by the first terminal.

In some embodiments, the first control information includes the second indication information and the third indication information;
the receiving, according to the first control information, the SL-PRS and/or PSSCH sent by the first terminal includes:
determining, based on the second indication information, the third indication information, and first-level SCI, the time-domain location of the SL-PRS resource and/or the time-domain location of the PSSCH, wherein the first-level SCI is used for indicating the time-domain locations of the PSSCH and the SL-PRS resource; and
receiving, based on the time-domain location of the SL-PRS resource, the SL-PRS sent by the first terminal, and/or receiving, based on the time-domain location of the PSSCH, the PSSCH sent by the first terminal.

In some embodiments, the first control information includes the fifth indication information;
the receiving, according to the first control information, the PSSCH sent by the first terminal includes:
determining, based on the fifth indication information, the time-domain location of the PSSCH; and
receiving, based on the time-domain location of the PSSCH, the PSSCH sent by the first terminal.

In some embodiments, the first control information includes the fourth indication information or the sixth indication information;
the receiving, according to the first control information, the SL-PRS sent by the first terminal includes:
determining the time-domain location of the SL-PRS resource based on the fourth indication information or the sixth indication information; and
receiving, based on the time-domain location of the SL-PRS resource, the SL-PRS sent by the first terminal.

In a third aspect, an embodiment of this disclosure further provides a communication device, wherein the communication device is a first communication device, and includes: a memory, a transceiver, and a processor; the memory is used for storing a computer program; and the transceiver is used for transmitting and receiving data and performing the following steps under the control of the processor:
sending first control information to a second terminal, wherein the first control information includes at least one of the following:
first indication information for indicating a type of second-level sidelink control information (SCI);
second indication information for indicating a relative relationship between a time-domain location of a sidelink positioning reference signal (SL-PRS) resource and a time-domain location of a physical sidelink shared channel (PSSCH);
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

In some embodiments, the first indication information is a reserved field value of a first field in first-level SCI, the first field being used for indicating a format of the second-level SCI; or,
the first indication information is a reserved bit in a first format, the first format being an existing format of the second-level SCI.

In some embodiments, in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

In some embodiments, the second-level SCI is used for indicating SL-PRS resource information.

In some embodiments, the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

In some embodiments, the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

In some embodiments, the fifth indication information is used for indicating:
an index of a last OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

In some embodiments, the index of the SL-PRS resource has a one-to-one correspondence with at least one of the following:
a quantity of OFDM symbols occupied by the SL-PRS resource;
an index of a first OFDM symbol occupied by the SL-PRS resource;
an index of a last OFDM symbol occupied by the SL-PRS resource; or
an offset between the first OFDM symbol occupied by the SL-PRS resource and a last OFDM symbol occupied by the PSSCH.

In some embodiments, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

In some embodiments, the first control information is carried by at least one of the following:
first-level SCI;
the second-level SCI;
downlink control information (DCI);
radio resource control (RRC) signaling; or
sidelink positioning protocol (SLPP) signaling.

In a fourth aspect, an embodiment of this disclosure further provides an information transmission apparatus, including:
a first sending unit, configured to send first control information to a second terminal, wherein the first control information includes at least one of the following:
first indication information for indicating a type of second-level sidelink control information (SCI);
second indication information for indicating a relative relationship between a time-domain location of a sidelink positioning reference signal (SL-PRS) resource and a time-domain location of a physical sidelink shared channel (PSSCH);
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

In some embodiments, the first indication information is a reserved field value of a first field in first-level SCI, the first field being used for indicating a format of the second-level SCI; or,
the first indication information is a reserved bit in a first format, the first format being an existing format of the second-level SCI.

In some embodiments, in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

In some embodiments, the second-level SCI is used for indicating SL-PRS resource information.

In some embodiments, the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

In some embodiments, the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

In some embodiments, the fifth indication information is used for indicating:
an index of a last OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

In some embodiments, the index of the SL-PRS resource has a one-to-one correspondence with at least one of the following:
a quantity of OFDM symbols occupied by the SL-PRS resource;
an index of a first OFDM symbol occupied by the SL-PRS resource;
an index of a last OFDM symbol occupied by the SL-PRS resource; or
an offset between the first OFDM symbol occupied by the SL-PRS resource and a last OFDM symbol occupied by the PSSCH.

In some embodiments, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

In some embodiments, the first control information is carried by at least one of the following:
first-level SCI;
the second-level SCI;
downlink control information (DCI);
radio resource control (RRC) signaling; or
sidelink positioning protocol (SLPP) signaling.

In a fifth aspect, an embodiment of this disclosure further provides a terminal, the terminal being a second terminal and including: a memory, a transceiver, and a processor; wherein the memory is used for storing a computer program; and the transceiver is used for transmitting and receiving data and performing the following steps under the control of the processor:
receiving first control information sent by a first communication device; and
receiving, according to the first control information, a sidelink positioning reference signal (SL-PRS) and/or a physical sidelink shared channel (PSSCH) sent by a first terminal;
wherein the first control information includes at least one of the following:
   first indication information for indicating a type of second-level sidelink control information (SCI);
   second indication information for indicating a relative relationship between a time-domain location of an SL-PRS resource and a time-domain location of the PSSCH;
   third indication information for indicating that the second-level SCI contains the time-domain location of the SL-PRS resource or indicating that the second-level SCI contains the time-domain location of the PSSCH;
   fourth indication information for indicating the time-domain location of the SL-PRS resource;
   fifth indication information for indicating a time-domain location of a PSSCH in the same slot as the SL-PRS resource; or
   sixth indication information for indicating an index of the SL-PRS resource, wherein the index of the SL-PRS resource is used for indicating the time-domain location of the SL-PRS resource.

In some embodiments, the first indication information is a reserved field value of a first field in first-level SCI, the first field being used for indicating a format of the second-level SCI; or,
the first indication information is a reserved bit in a first format, the first format being an existing format of the second-level SCI.

In some embodiments, in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

In some embodiments, the second-level SCI is used for indicating SL-PRS resource information.

In some embodiments, the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

In some embodiments, the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

In some embodiments, the fifth indication information is used for indicating:
an index of a last OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

In some embodiments, the index of the SL-PRS resource has a one-to-one correspondence with at least one of the following:
a quantity of OFDM symbols occupied by the SL-PRS resource;
an index of a first OFDM symbol occupied by the SL-PRS resource;
an index of a last OFDM symbol occupied by the SL-PRS resource; or
an offset between the first OFDM symbol occupied by the SL-PRS resource and a last OFDM symbol occupied by the PSSCH.

In some embodiments, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

In some embodiments, the transceiver is also used for:
receiving the first control information sent by the first communication device through at least one of the following:
first-level SCI;
the second-level SCI;
downlink control information (DCI);
radio resource control (RRC) signaling; or
sidelink positioning protocol (SLPP) signaling.

In some embodiments, the first control information includes the first indication information; the processor is further used for:
determining a type of the second-level SCI based on the first indication information;
determining a time-domain location of the SL-PRS resource based on the type of the second-level SCI; and
receiving, by means of the transceiver and based on the time-domain location of the SL-PRS resource, the SL-PRS sent by the first terminal.

In some embodiments, the first control information includes the second indication information and the third indication information; the processor is further used for:
determining, based on the second indication information, the third indication information, and first-level SCI, the time-domain location of the SL-PRS resource and/or the time-domain location of the PSSCH, wherein the first-level SCI is used for indicating the time-domain locations of the PSSCH and the SL-PRS resource;
the transceiver is further used for:
   receiving, based on the time-domain location of the SL-PRS resource, the SL-PRS sent by the first terminal; and/or,
   receiving, based on the time-domain location of the PSSCH, the PSSCH sent by the first terminal.

In some embodiments, the first control information includes the fifth indication information; the processor is further used for:
determining, based on the fifth indication information, the time-domain location of the PSSCH; and
receiving, by means of the transceiver and based on the time-domain location of the PSSCH, the PSSCH sent by the first terminal.

In some embodiments, the first control information includes the fourth indication information or the sixth indication information; the processor is further used for:
determining the time-domain location of the SL-PRS resource based on the fourth indication information or the sixth indication information; and
receiving, by means of the transceiver and based on the time-domain location of the SL-PRS resource, the SL-PRS sent by the first terminal.

In a sixth aspect, an embodiment of this disclosure further provides an information transmission apparatus, including:
a first receiving unit, configured to receive first control information sent by a first communication device; and
a second receiving unit, configured to receive, according to the first control information, a sidelink positioning reference signal (SL-PRS) and/or a physical sidelink shared channel (PSSCH) sent by a first terminal;
wherein the first control information includes at least one of the following:
   first indication information for indicating a type of second-level sidelink control information (SCI);
   second indication information for indicating a relative relationship between a time-domain location of an SL-PRS resource and a time-domain location of the PSSCH;
   third indication information for indicating that the second-level SCI contains the time-domain location of the SL-PRS resource or indicating that the second-level SCI contains the time-domain location of the PSSCH;
   fourth indication information for indicating the time-domain location of the SL-PRS resource;
   fifth indication information for indicating a time-domain location of a PSSCH in the same slot as the SL-PRS resource; or
   sixth indication information for indicating an index of the SL-PRS resource, wherein the index of the SL-PRS resource is used for indicating the time-domain location of the SL-PRS resource.

In some embodiments, the first indication information is a reserved field value of a first field in first-level SCI, the first field being used for indicating a format of the second-level SCI; or,
the first indication information is a reserved bit in a first format, the first format being an existing format of the second-level SCI.

In some embodiments, in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

In some embodiments, the second-level SCI is used for indicating SL-PRS resource information.

In some embodiments, the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

In some embodiments, the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

In some embodiments, the fifth indication information is used for indicating:
an index of a last OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

In some embodiments, the index of the SL-PRS resource has a one-to-one correspondence with at least one of the following:
a quantity of OFDM symbols occupied by the SL-PRS resource;
an index of a first OFDM symbol occupied by the SL-PRS resource;
an index of a last OFDM symbol occupied by the SL-PRS resource; or
an offset between the first OFDM symbol occupied by the SL-PRS resource and a last OFDM symbol occupied by the PSSCH.

In some embodiments, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

In some embodiments, the first receiving unit is specifically configured to:
receive the first control information sent by the first communication device through at least one of the following:
first-level SCI;
the second-level SCI;
downlink control information (DCI);
radio resource control (RRC) signaling; or
sidelink positioning protocol (SLPP) signaling.

In some embodiments, the first control information includes the first indication information;
the second receiving unit is specifically configured to:
determine a type of the second-level SCI based on the first indication information;
determine a time-domain location of the SL-PRS resource based on the type of the second-level SCI; and
receive, based on the time-domain location of the SL-PRS resource, the SL-PRS sent by the first terminal.

In some embodiments, the first control information includes the second indication information and the third indication information;
the second receiving unit is specifically configured to:
determine, based on the second indication information, the third indication information, and first-level SCI, the time-domain location of the SL-PRS resource and/or the time-domain location of the PSSCH, wherein the first-level SCI is used for indicating the time-domain locations of the PSSCH and the SL-PRS resource; and
receive, based on the time-domain location of the SL-PRS resource, the SL-PRS sent by the first terminal, and/or receive, based on the time-domain location of the PSSCH, the PSSCH sent by the first terminal.

In some embodiments, the first control information includes the fifth indication information;
the second receiving unit is specifically configured to:
determine, based on the fifth indication information, the time-domain location of the PSSCH; and
receive, based on the time-domain location of the PSSCH, the PSSCH sent by the first terminal.

In some embodiments, the first control information includes the fourth indication information or the sixth indication information;
the second receiving unit is specifically configured to:
determine the time-domain location of the SL-PRS resource based on the fourth indication information or the sixth indication information; and
receive, based on the time-domain location of the SL-PRS resource, the SL-PRS sent by the first terminal.

In a seventh aspect, an embodiment of this disclosure further provides a processor-readable storage medium storing a computer program, wherein the computer program is used for causing a processor to perform the steps of the information transmission method described in the first aspect, or to perform the steps of the information transmission method described in the second aspect.

The technical solution of this disclousre has at least the following beneficial effects.

In the technical solution according to embodiments of this disclosure, by sending first control information to the second terminal, wherein the first control information includes at least one of the following: first indication information for indicating a type of the second-level SCI; second indication information for indicating the relative relationship between the time-domain location of the SL-PRS resource and the time-domain location of the PSSCH; third indication information for indicating that the second-level SCI contains the time-domain location of the SL-PRS resource or indicating that the second-level SCI contains the time-domain location of the PSSCH; fourth indication information for indicating the time-domain location of the SL-PRS resource; fifth indication information for indicating the time-domain location of the PSSCH in the same slot as the SL-PRS resource; or sixth indication information for indicating the index of the SL-PRS resource, the index of the SL-PRS resource being used for indicating the time-domain location of the SL-PRS resource; thus, when the SL-PRS is transmitted in the shared resource pool, the time-domain location indication of the SL-PRS resource in the first control information enables the terminal to correctly receive the SL-PRS, thereby completing the sidelink positioning.

### BRIEF DESCRIPTION OF THE DRAWINGS

Fig. 1 is a schematic diagram of SL-PRS-based positioning between terminals;
Fig. 2 is a flowchart illustrating an information transmission method according to an embodiment of this disclosure;
Fig. 3 is a schematic diagram illustrating the relative relationship between the time-domain location of the SL-PRS resource and the time-domain location of the PSSCH according to an embodiment of this disclosure;
Fig. 4 is another schematic diagram illustrating the relative relationship between the time-domain location of the SL-PRS resource and the time-domain location of the PSSCH according to an embodiment of this disclosure;
Fig. 5 is a schematic diagram illustrating the time-domain location of the SL-PRS resource indicated by the fourth indication information according to an embodiment of this disclosure;
Fig. 6 is a schematic diagram illustrating the time-domain location of the PSSCH indicated by the fifth indication information according to an embodiment of this disclosure;
Fig. 7 is a schematic diagram illustrating the index of the SL-PRS resource indicated by the sixth indication information according to an embodiment of this disclosure;
Fig. 8 is a schematic diagram illustrating the first control information transmission according to an embodiment of this disclosure;
Fig. 9 is another flowchart illustrating an information transmission method according to an embodiment of this disclosure;
Fig. 10 is a structural block diagram of a communication device according to an embodiment of the present disclosure;
Fig. 11 is a modular diagram of an information transmission apparatus according to an embodiment of the present disclosure;
Fig. 12 is a structural block diagram of a terminal according to an embodiment of this disclosure;
Fig. 13 is another modular diagram of an information transmission apparatus according to an embodiment of this disclosure.

### DETAILED DESCRIPTION

In embodiments of this disclosure, the term "and/or" describes the relationship between related objects, indicating that three relationships can exist. For example, A and/or B can represent three cases: A alone, A and B simultaneously, and B alone. The symbol "/" generally indicates that the preceding and following related objects have an "or" relationship.

In embodiments of this disclosure, the term "multiple" refers to two or more, and other quantifiers are similar.

The technical solution according to the embodiments of this disclosure will be clearly and completely described below with reference to the accompanying drawings. Obviously, the described embodiments are only some embodiments of this disclosure, and not all embodiments. Based on the embodiments of this disclosure, all other embodiments obtained by those of ordinary skill in the art without creative effort are within the scope of this disclosure.

To facilitate understanding of the solutions disclosed herein, the relevant content of this disclosure will be introduced first.

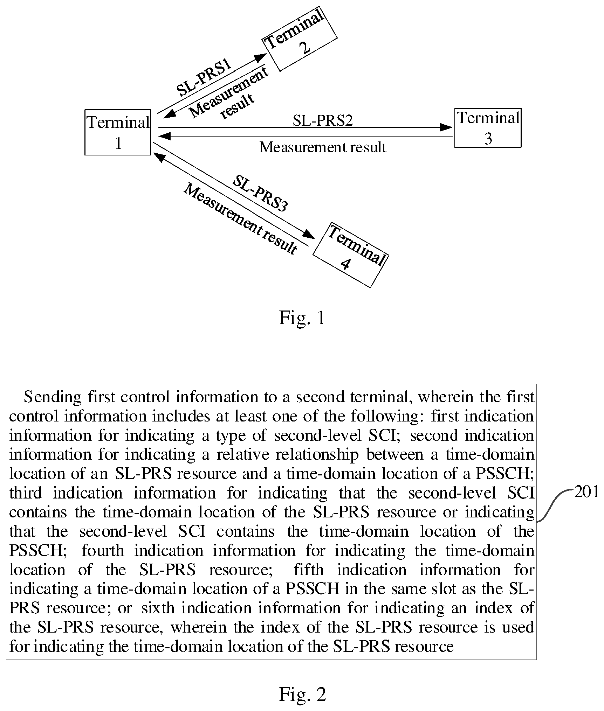

Fig. 1 illustrates a schematic diagram of positioning between terminals using SL-PRS. Terminal 1 uses time-frequency resources to send SL-PRSs to terminals 2 to 4. After receiving the SL-PRS, terminals 2 to 4 send the measurement results back to terminal 1 to assist terminal 1 in completing the positioning calculation.

In related sidelink (SL) data communication technologies, control information for indicating the transmission parameters of the physical sidelink shared channel (PSSCH) is carried through two levels of sidelink control information (SCI): a first-level SCI, and a second-level SCI. The first-level SCI is used for indicating the time-frequency resource information of the PSSCH, while the second-level SCI is used for indicating the hybrid automatic repeat request (HARQ) information related to the PSSCH, as well as the source and destination ID information. The second-level SCI includes SCI formats 2-A/B/C.

Conventionally, PSSCH and SL-PRS are multiplexed using time division multiplexing (TDM), i.e., PSSCH and SL-PRS occupy different respective symbols in the same slot.

SL-PRS can be transmitted in either a dedicated resource pool or a shared resource pool. Dedicated resource pool and shared resource pool are the two types of resource pools that can be used for SL-PRS transmission. In a dedicated resource pool, only SL-PRS and its associated physical sidelink control channel (PSCCH) can be transmitted. In a shared resource pool, both SL-PRS and SL data irrelevant to positioning, such as PSSCH or physical sidelink feedback channel (PSFCH), can be transmitted.

When SL-PRS is transmitted in a shared resource pool, PSSCH and SL-PRS are transmitted in the same slot. The terminal needs to determine the type information of the second-level SCI used for indicating SL-PRS resource information, as well as the specific orthogonal frequency division multiplexing (OFDM) symbol positions within the slot that are occupied by the SL-PRS resource, in order to receive the SL-PRS and complete SL positioning. However, there is currently no technical solution for sending indication information to the terminal so that the terminal can obtain such information. Since the terminal cannot determine the various information about the to-be-received SL-PRS transmission, the terminal cannot complete the reception and decoding of the SL-PRS, and therefore cannot complete the sidelink positioning based on the SL-PRS.

To address the aforementioned technical problems, embodiments of this disclosure provide an information transmission method and apparatus, device, and medium. The method and apparatus are based on the same concept. Since the method and apparatus solve problems in similar principles, their implementations can be mutually referenced, and repeated details will be omitted herein.

Fig. 2 shows a flowchart of an information transmission method according to an embodiment of this disclosure. The method is performed by a first communication device, specifically a first terminal or a base station. The method may specifically include:
Step 201: sending first control information to a second terminal, wherein the first control information includes at least one of the following:
first indication information for indicating a type of second-level sidelink control information (SCI);
second indication information for indicating a relative relationship between a time-domain location of a sidelink positioning reference signal (SL-PRS) resource and a time-domain location of a physical sidelink shared channel (PSSCH);
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

In some embodiments, the second-level SCI is used for indicating SL-PRS resource information.

Specifically, the first indication information is used for indicating the type of the second-level SCI in the shared resource pool.

In an optional implementation, the first indication information is a reserved field value of a first field in the first-level SCI; wherein the first field is used for indicating the format of the second-level SCI.

Specifically, the reserved field value of the first field is 11, which is used for indicating the type of the second-level SCI. That is, the field "second-level SCI format" (first field) in the first-level SCI = 11 indicates the type of the second-level SCI, wherein the type of the second-level SCI is used for indicating SL-PRS resource information.

In another optional implementation, the first indication information is a reserved bit in a first format, wherein the first format is an existing format of the second-level SCI.

Specifically, the first format is represented by a preset field value of the first field in the first-level SCI. The preset field value of the first field is 10, that is, the field "second-level SCI format" (first field) in the first-level SCI = 10, then the first format is the second-level SCI format 2-C.

Further, in a case that the reserved bit in the first format is 0, the second-level SCI format 2-C is used for indicating inter-user coordination information; that is, the second-level SCI format 2-C retains its original purpose.

In a case that the reserved bit in the first format is 1, the second-level SCI format 2-C is used for indicating SL-PRS resource information. At this time, the first format is a new format. That is, the second-level SCI format 2-C is a new format used for indicating SL-PRS resource information, which is a new type of second-level SCI.

### Example 1

1. Terminal A sends first control information to terminal B, where the first control information includes first indication information.
2. Terminal B receives the SL-PRS and/or PSSCH sent by Terminal A according to the first control information.

The first indication information indicates the type of the second-level SCI used for indicating SL-PRS resource information in the shared resource pool. The first indication information is carried by the first-level SCI. Regarding how the first-level SCI carries the first indication information, the following two candidate schemes are included.

Candidate Scheme 1: The first indication information uses the reserved field value of the field "second-level SCI format" in the first-level SCI, that is, the field "second-level SCI format" in the first-level SCI = 11, to indicate the type of second-level SCI used for indicating SL-PRS resource information.

Candidate Scheme 2: Set the field "second-level SCI format" in the first-level SCI to 10, that is, 10 corresponds to the second-level SCI format 2-C; the first indication information uses the reserved bit in the second-level SCI format 2-C to indicate whether the second SCI is used for indicating SL-PRS resource information.

Specifically, when the reserved bit is 0, the second-level SCI format 2-C retains its original purpose, that is, the second-level SCI format 2-C is used for indicating inter-user coordination information.

When the reserved bit is 1, the second-level SCI format 2-C is a new format used for indicating SL-PRS resource information, which is a new type of second-level SCI.

For candidate scheme 1, as shown in Table 1, the first-level SCI contains a field "second-level SCI Format", which has four possible values: 00, 01, 10, and 11. The meaning of each value is shown in the table below. For example, when the value of this field is 10, it indicates that the format of the second-level SCI is SCI format 2-C. When the value of this field is 11 (reserved field value), it indicates a reserved state, that is, no meaning has been assigned to this value yet. In this case, in order to indicate the type of the second-level SCI used for indicating SL PRS resource information in the shared resource pool, the reserved state indicated by the field "second-level SCI Format" in the first-level SCI = 11 is used to represent the new type of the second-level SCI, for example, it can be used to represent an SCI format 2-D, as shown in Table 2.

**Table 1: The field "second-level SCI format" in the first-level SCI (reserved state is unused)**

| Value of the field "second-level SCI format" | The second-level SCI format represented |
|---|---|
| 00 | SCI format 2-A |
| 01 | SCI format 2-B |
| 10 | SCI format 2-C |
| 11 | reserved |

**Table 2: The field "second-level SCI format" in the first-level SCI (reserved state is used)**

| Value of the field "second-level SCI format" | The second-level SCI format represented |
|---|---|
| 00 | SCI format 2-A |
| 01 | SCI format 2-B |
| 10 | SCI format 2-C |
| 11 | SCI format 2-D |

In this embodiment, the terminal determines, according to the first indication information, the type of the second-level SCI used for indicating SL-PRS resource information in the shared resource pool, thereby enabling the terminal to complete the reception and decoding of SL-PRS according to the first indication information, and complete the sidelink positioning based on SL-RPS.

In some embodiments, the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

### Example 2

1. Terminal A or the base station sends first control information to terminal B, where the first control information contains second indication information and third indication information.
2. Terminal B receives, based on the first control information, the SL-PRS and/or PSSCH sent by Terminal A.

The second indication information indicates the relative relationship between the time-domain location of the SL-PRS resource and the time-domain location of the PSSCH.

Specifically, the candidate schemes corresponding to the relative relationship between the time-domain location of the SL-PRS resource and the time-domain location of the PSSCH are as follows.

Candidate Scheme 1: In a single slot, both PSSCH and SL-PRS resource are included, and the OFDM symbols occupied by PSSCH are located before the OFDM symbols occupied by the SL-PRS resource.

Candidate Scheme 2: In a single slot, both PSSCH and SL-PRS resource are included, and the OFDM symbols occupied by PSSCH are located after the OFDM symbols occupied by the SL-PRS resource.

The third indication information is used for indicating that the second-level SCI contains the time-domain location of the SL-PRS resource, or is used for indicating that the second-level SCI contains the time-domain location of the PSSCH.

Specifically, the candidate schemes corresponding to the third indication information are as follows.

Candidate Scheme 1: The third indication information indicates that the second-level SCI contains the time-domain location of the SL-PRS resource; in this way, the terminal can determine the time-domain location of PSSCH based on the time-domain location of the "PSSCH+SL PRS resource" in the first-level SCI.

Candidate Scheme 2: The third indication information indicates that the second-level SCI contains the time-domain location of the PSSCH; in this way, the terminal can determine the time-domain location of the SL-PRS resource based on the time-domain location of the "PSSCH+SL PRS resource" in the first-level SCI.

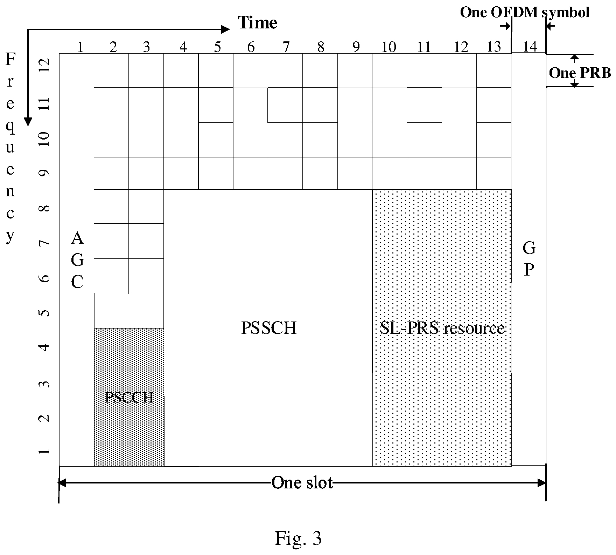

As shown in Fig. 3, each small square represents one physical resource block (PRB) in the frequency domain and one OFDM symbol in the time domain. One subchannel includes four PRBs. PSSCH uses six OFDM symbols (symbols #4 to #9) in the time domain and eight PRBs (PRBs #1 to #8) in the frequency domain. These eight PRBs form two subchannels.

The SL-PRS resource uses 4 OFDM symbols (symbols #10 to #13) in the time domain and 8 PRBs (PRBs #1 to #8) in the frequency domain. The PSCCH uses 2 OFDM symbols (symbols #2 to #3) in the time domain and 4 PRBs (PRBs #1 to #4) in the frequency domain. The PSCCH carries the first-level SCI. The PSSCH carries the second-level SCI and SL-SCH data.

The second indication information indicates the relative relationship between the time-domain location of the SL-PRS resource and the time-domain location of the PSSCH. This relative relationship means whether the SL-PRS resource is before or after the PSSCH. As shown in Fig. 3, in one slot of the shared resource pool, both PSSCH and SL-PRS resource are included, and the OFDM symbols occupied by the PSSCH are located before the OFDM symbols occupied by the SL-PRS resource.

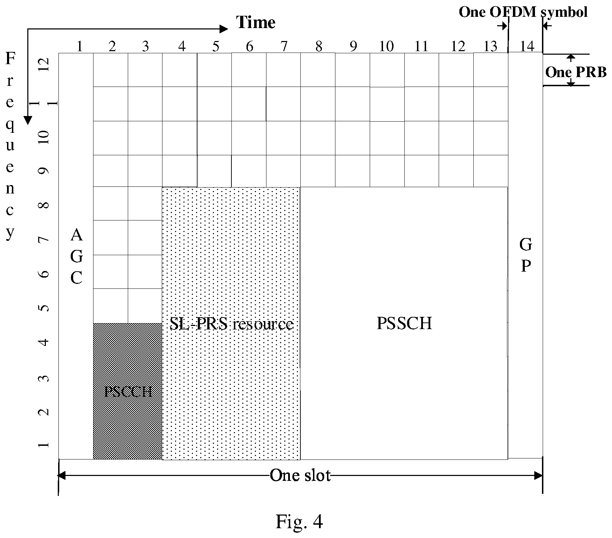

As shown in Fig. 4, in one slot of the shared resource pool, both PSSCH and SL-PRS resource are included, and the OFDM symbols occupied by PSSCH are located after the OFDM symbols occupied by SL-PRS resource.

Additionally, the time-domain location, that is, the specific slot index, of the "PSSCH+SL-PRS resource" is indicated in the first-level SCI. However, terminal B is unaware of which symbols within that slot are used to transmit PSSCH and which symbols are used to transmit SL-PRS. At this time, the third indication information is used for indicating the time-domain location occupied by PSSCH, or is used for indicating the time-domain location occupied by SL-PRS resource, thereby allowing terminal B to obtain the time-domain location of SL-PRS or PSSCH. Thus, two candidate schemes exist.

Candidate Scheme 1: The third indication information indicates that the second-level SCI contains the time-domain location of the SL-PRS resource; in this way, the terminal can determine the time-domain location of PSSCH based on the time-domain location of "PSSCH+SL PRS resource" in the first-level SCI.

Candidate Scheme 2: The third indication information indicates that the second-level SCI contains the time-domain location of the PSSCH; in this way, the terminal can determine the time-domain location of the SL PRS resource based on the time-domain location of "PSSCH+SL PRS resource" in the first-level SCI.

In this embodiment, the terminal determines the relative relationship between the time-domain location of the SL-PRS resource and the time-domain location of the PSSCH in the shared resource pool, as well as the time-domain location of the SL-PRS, based on the second indication information and third indication information. This enables the terminal to complete the reception and decoding of the SL-PRS based on the second indication information and third indication information, and to complete the sidelink positioning based on the SL-PRS.

In some embodiments, the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

### Example 3

1. Terminal A or the base station sends first control information to terminal B, where the first control information contains fourth indication information; wherein, the fourth indication information indicates the time-domain location of SL-PRS resource in the shared resource pool.
2. Terminal B receives, according to the first control information, the SL-PRS and/or PSSCH sent by Terminal A.

Specifically, the fourth indication information is as follows:
the fourth indication information only indicates the index of the first OFDM symbol occupied by the SL-PRS resource, and the SL-PRS resource occupies all remaining available OFDM symbols in the slot; or,
the fourth indication information indicates the index of the first OFDM symbol occupied by the SL-PRS resource, and a quantity of OFDM symbols occupied by the SL-PRS resource; or,
the fourth indication information indicates the index of the first OFDM symbol occupied by the SL-PRS resource, and the index of the last OFDM symbol occupied by the SL-PRS resource.

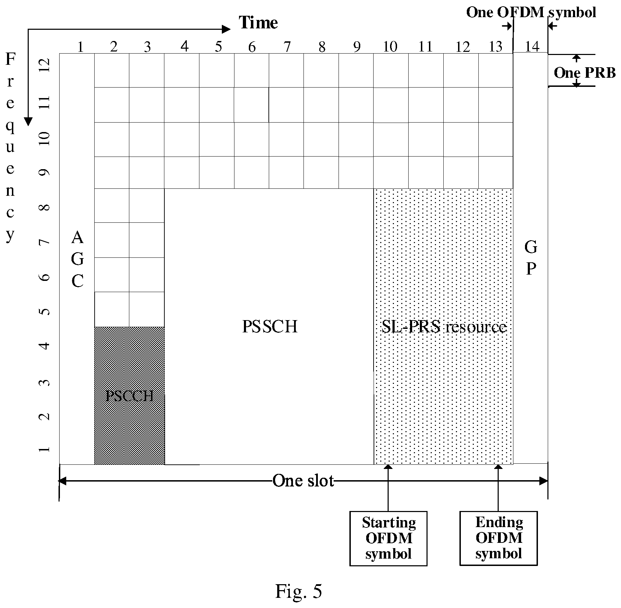

As shown in Fig. 5, each small square represents one PRB in the frequency domain and one OFDM symbol in the time domain. One subchannel includes 4 PRBs. PSSCH uses 6 OFDM symbols (symbols #4 to #9) in the time domain and 8 PRBs (PRBs #1 to #8) in the frequency domain. These 8 PRBs form two subchannels.

The SL-PRS resource uses 4 OFDM symbols (symbols #10 to #13) in the time domain and 8 PRBs (PRBs #1 to #8) in the frequency domain. The PSCCH uses 2 OFDM symbols (symbols #2 to #3) in the time domain and 4 PRBs (PRBs #1 to #4) in the frequency domain. The PSCCH carries the first-level SCI. The PSSCH carries the second-level SCI and SL-SCH data.

For example, the fourth indication information indicates the index of the first OFDM symbol occupied by the SL-PRS resource (i.e., the starting OFDM symbol in Fig. 5, index #10) and the index of the last OFDM symbol occupied by the SL-PRS resource (i.e., the ending OFDM symbol in Fig. 5, index #13).

In this embodiment, the terminal determines the time-domain location of the SL-PRS resource in the shared resource pool according to the fourth indication information, thereby enabling the terminal to complete the reception and decoding of the SL-PRS according to the fourth indication information, and to complete the sidelink positioning based on the SL-PRS.

In some embodiments, the fifth indication information is used for indicating:
an index of a first OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

### Example 4

1. Terminal A or the base station sends first control information to terminal B, where the first control information includes fifth indication information; the fifth indication information indicates the time-domain location of PSSCH in the shared resource pool.
2. Terminal B receives, based on the first control information, the SL-PRS and/or PSSCH sent by Terminal A.

Specifically, the fifth indication information is as follows:
the fifth indication information only indicates the index of the last OFDM symbol occupied by the PSSCH, and the PSSCH occupies all remaining available OFDM symbols in the slot; or,
the fifth indication information indicates the index of the first OFDM symbol occupied by the PSSCH, and the quantity of OFDM symbols occupied by the PSSCH; or,
the fifth indication information indicates the first OFDM symbol index occupied by the PSSCH and the last OFDM symbol index occupied by the PSSCH.

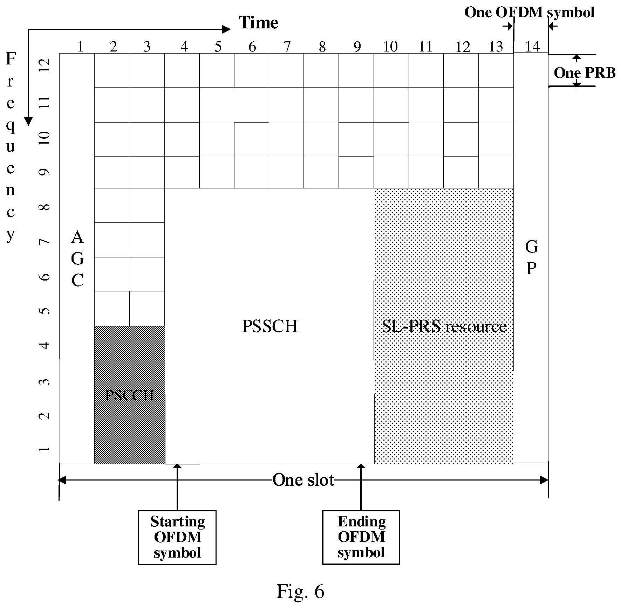

As shown in Fig. 6, each small square represents one PRB in the frequency domain and one OFDM symbol in the time domain. One subchannel includes 4 PRBs. PSSCH uses 6 OFDM symbols (symbols #4 to #9) in the time domain and 8 PRBs (PRBs #1 to #8) in the frequency domain. These 8 PRBs form two subchannels.

The SL-PRS resource uses 4 OFDM symbols (symbols #10 to #13) in the time domain and 8 PRBs (PRBs #1 to #8) in the frequency domain. The PSCCH uses 2 OFDM symbols (symbols #2 to #3) in the time domain and 4 PRBs (PRBs #1 to #4) in the frequency domain. The PSCCH carries the first-level SCI. The PSSCH carries the second-level SCI and SL-SCH data.

For example, the fifth indication information indicates the index of the first OFDM symbol occupied by PSSCH (i.e., the starting OFDM symbol in Fig. 6, index #4) and the index of the last OFDM symbol occupied by PSSCH (i.e., the ending OFDM symbol in Fig. 6, index #9).

In this embodiment, the terminal determines the time-domain location of the PSSCH in the shared resource pool according to the fifth indication information, thereby enabling the terminal to complete the reception and decoding of SL-PRS according to the fifth indication information, and complete the sidelink positioning according to SL-PRS.

It should be noted that, corresponding to the sixth indication information, the index of the SL-PRS resource has a one-to-one correspondence with at least one of the following:
the quantity of OFDM symbols occupied by the SL-PRS resource;
the index of the first OFDM symbol occupied by the SL-PRS resource;
the index of the last OFDM symbol occupied by the SL-PRS resource; or
an offset between the first OFDM symbol occupied by the SL-PRS resource and a last OFDM symbol occupied by the PSSCH.

Furthermore, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is the first OFDM symbol of the SL-PRS resource.

### Example 5

1. Terminal A or the base station sends first control information to terminal B, where the first control information contains sixth indication information; the sixth indication information indicates the index of SL-PRS resources in the shared resource pool.
2. Terminal B receives, based on the first control information, the SL-PRS and/or PSSCH sent by Terminal A.

Specifically, the sixth indication information is as follows:
the sixth indication information is the index of the SL-PRS resource; the terminal indicates the time-domain location of the SL-PRS resource by using the index of the SL-PRS resource; the index of the SL-PRS resource has a one-to-one correspondence with at least one of the following:
the quantity of OFDM symbols occupied by the SL-PRS resource;
the index of the first OFDM symbol occupied by the SL-PRS resource;
the index of the last OFDM symbol occupied by the SL-PRS resource; or
an offset between the first OFDM symbol occupied by the SL-PRS resource and a last OFDM symbol occupied by the PSSCH.

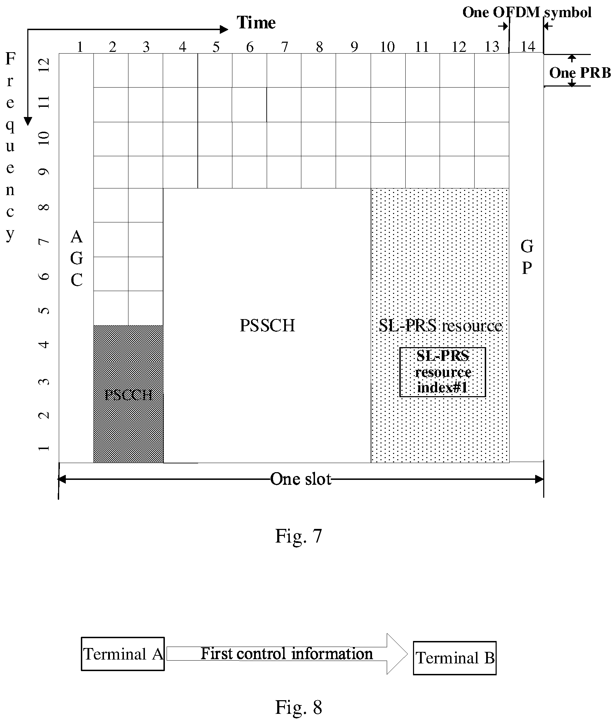

When the index of the SL-PRS resource is used for indicating the time-domain location of the SL-PRS resource, the terminal assumes that the SL-PRS resource is located after the PSSCH and must be placed starting from the OFDM symbol immediately following the PSSCH, see Fig. 7.

In other words, the time-domain resource information occupied by SL-PRS resources is indicated by using SL-PRS resource IDs, which is an implicit indication method. Since there is a one-to-one correspondence between the SL-PRS resource ID and the information of the symbols occupied by the SL-PRS resource, information about the time-domain resource occupied by the SL-PRS resource can be indicated through the SL-PRS resource ID. If the offset between the first OFDM symbol occupied by the SL-PRS resource and the last OFDM symbol occupied by the PSSCH is not used, the terminal would need to assume that the SL-PRS resource is located after the PSSCH and must begin at the OFDM symbol immediately next to the PSSCH, meaning the offset is 0.

In this embodiment, the terminal determines the time-domain location of the SL-PRS in the shared resource pool according to the sixth indication information, thereby enabling the terminal to complete the reception and decoding of the SL-PRS according to the sixth indication information, and to complete the sidelink positioning based on the SL-PRS.

In some embodiments, the first control information is carried by at least one of the following:
first-level SCI;
the second-level SCI;
downlink control information (DCI);
radio resource control (RRC) signaling; or
sidelink positioning protocol (SLPP) signaling.

### Example 6

1. Terminal A or a base station sends first control information to terminal B. The first control information contains at least one of the following: first indication information, second indication information, third indication information, fourth indication information, fifth indication information, or sixth indication information.
2. Terminal B receives, according to the first control information, the SL-PRS and/or PSSCH sent by Terminal A.

Specifically, the carrier of the first control information is as follows:
the first control information is carried by the first-level SCI, such as SCI format 1A;
the first control information is carried by the second-level SCI, such as SCI format 2D;
the first control information is carried by downlink control information (DCI);
the first control information is carried by radio resource control (RRC) signaling, such as PC5 RRC signaling;
the first control information is carried by the sidelink positioning protocol (SLPP) signaling;
the first control information is carried by a combination of the above carriers, e.g., the first indication information is indicated by the first-level SCI, the second indication information is indicated by PC5 RRC signaling, and the third indication information is carried by SLPP signaling.

As shown in Fig. 8, terminal A sends the first control information to terminal B. If the first control information is carried by SCI, the latency is low because SCI is directly carried through the physical layer channel, but the physical layer signaling overhead is high. If the first control information is carried by RRC or SLPP higher layer signaling, it will not occupy physical layer signaling, but the latency is relatively higher. The first control information can also be carried by a combination of the above carriers. For example, the first indication information is indicated by the first-level SCI, the second indication information is indicated by PC5 RRC signaling, and the third indication information is carried by SLPP signaling. This can achieve a balance between physical layer signaling overhead and latency.

In this embodiment, the terminal selects a suitable method for carrying the first control information based on a comprehensive consideration of physical layer signaling overhead and latency. This allows the terminal to send or receive SL PRS based on the first control information and complete the sidelink positioning, while simultaneously meeting the requirements for physical layer signaling overhead and latency.

In the information transmission method according to the embodiment of this disclosure, the first control information is sent to a second terminal, wherein the first control information includes at least one of the following: first indication information for indicating the type of the second-level SCI; second indication information for indicating the relative relationship between the time-domain location of the SL-PRS resource and the time-domain location of the PSSCH; third indication information for indicating that the second-level SCI contains the time-domain location of the SL-PRS resource or indicating that the second-level SCI contains the time-domain location of the PSSCH; fourth indication information for indicating the time-domain location of the SL-PRS resource; fifth indication information for indicating the time-domain location of the PSSCH in the same slot as the SL-PRS resource; or sixth indication information for indicating an index of the SL-PRS resource, wherein the index of the SL-PRS resource is used for indicating the time-domain location of the SL-PRS resource. Thus, when the SL-PRS is transmitted in the shared resource pool, the time-domain location indication of the SL-PRS resource in the first control information enables the terminal to correctly receive the SL-PRS, thereby completing the sidelink positioning.

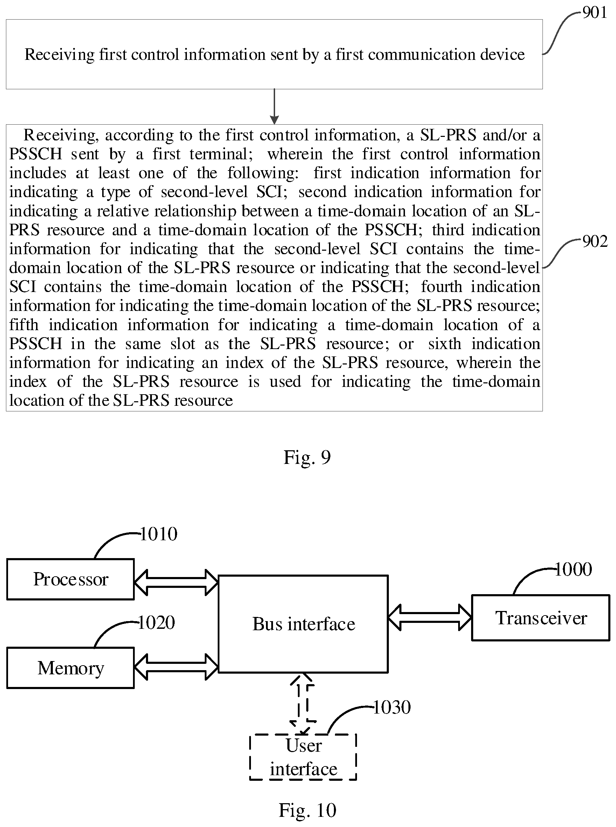

Fig. 9 is a flowchart of an information transmission method according to an embodiment of this disclosure. The method is performed by a second terminal, and may specifically include:
Step 901: receiving first control information sent by a first communication device;
Step 902: receiving, according to the first control information, a sidelink positioning reference signal (SL-PRS) and/or a physical sidelink shared channel (PSSCH) sent by a first terminal;
wherein the first control information includes at least one of the following:
   first indication information for indicating a type of second-level sidelink control information (SCI);
   second indication information for indicating a relative relationship between a time-domain location of an SL-PRS resource and a time-domain location of the PSSCH;
   third indication information for indicating that the second-level SCI contains the time-domain location of the SL-PRS resource or indicating that the second-level SCI contains the time-domain location of the PSSCH;
   fourth indication information for indicating the time-domain location of the SL-PRS resource;
   fifth indication information for indicating a time-domain location of a PSSCH in the same slot as the SL-PRS resource; or
   sixth indication information for indicating an index of the SL-PRS resource, wherein the index of the SL-PRS resource is used for indicating the time-domain location of the SL-PRS resource.

In some embodiments, the second-level SCI is used for indicating SL-PRS resource information.

Specifically, the first indication information is used for indicating the type of the second-level SCI in the shared resource pool.

In an optional implementation, the first indication information is a reserved field value of a first field in the first-level SCI; wherein the first field is used for indicating the format of the second-level SCI;

Specifically, the reserved field value of the first field is 11, which is used for indicating the type of the second-level SCI. That is: the field "second-level SCI format" (first field) in the first-level SCI = 11 indicates the type of the second-level SCI, and the type of the second-level SCI is used for indicating SL-PRS resource information.

In another optional implementation, the first indication information is a reserved bit in a first format, wherein the first format is an existing format of the second-level SCI.

Specifically, the first format is represented by the preset field value of the first field in the first-level SCI. The preset field value of the first field is 10, that is: the field "second-level SCI format" (first field) in the first-level SCI = 10, then the first format is the second-level SCI format 2-C.

Further, in a case that the reserved bit in the first format is 0, the second-level SCI format 2-C is used for indicating inter-user coordination information; that is, the second-level SCI format 2-C retains its original purpose.

In a case that the reserved bits in the first format is 1, the second-level SCI format 2-C is used for indicating SL-PRS resource information. At this time, the first format is a new format. That is, the second-level SCI format 2-C is a new format used for indicating SL-PRS resource information, which is a new type of second-level SCI.

In some embodiments, the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

In some embodiments, the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

In some embodiments, the fifth indication information is used for indicating:
an index of a last OFDM symbol occupied by this PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

It should be noted that, corresponding to the sixth indication information, the index of the SL-PRS resource has a one-to-one correspondence with at least one of the following:
a quantity of OFDM symbols occupied by the SL-PRS resource;
an index of the first OFDM symbol occupied by the SL-PRS resource;
an index of the last OFDM symbol occupied by the SL-PRS resource; or
an offset between the first OFDM symbol occupied by the SL-PRS resource and a last OFDM symbol occupied by the PSSCH.

Further, in a case that the index of the SL-PRS resource is used for indicating the time-domain location of the SL-PRS resource, the time-domain location of the SL-PRS resource is after the time-domain location of the PSSCH, and an OFDM symbol immediately following the PSSCH is a first OFDM symbol of the SL-PRS resource.

In an optional embodiment, the step 901 of receiving the first control information sent by the first communication device may include:
receiving the first control information sent by the first communication device through at least one of the following:
first-level SCI;
the second-level SCI;
downlink control information (DCI);
radio resource control (RRC) signaling; or
sidelink positioning protocol (SLPP) signaling.

In an optional embodiment, the first control information includes the first indication information; correspondingly, the step 902 of receiving, according to the first control information, the sidelink positioning reference signal (SL-PRS) sent by the first terminal may include:
determining a type of the second-level SCI based on the first indication information;
determining a time-domain location of the SL-PRS resource based on the type of the second-level SCI; and
receiving, based on the time-domain location of the SL-PRS resource, the SL-PRS sent by the first terminal.

In an optional embodiment, the first control information includes the second indication information and the third indication information; correspondingly, the step 902 of receiving, according to the first control information, the sidelink positioning reference signal (SL-PRS) and/or physical sidelink shared channel (PSSCH) sent by the first terminal may include:
determining, based on the second indication information, the third indication information, and first-level SCI, the time-domain location of the SL-PRS resource and/or the time-domain location of the PSSCH, wherein the first-level SCI is used for indicating the time-domain locations of the PSSCH and the SL-PRS resource; and
receiving, based on the time-domain location of the SL-PRS resource, the SL-PRS sent by the first terminal, and/or receiving, based on the time-domain location of the PSSCH, the PSSCH sent by the first terminal.

Specifically, as illustrated in Fig. 4, one slot in a shared resource pool contains both PSSCH and SL-PRS resource, and the OFDM symbols occupied by the PSSCH is located after the OFDM symbols occupied by the SL-PRS resource (i.e., the second indication information).

Additionally, the first-level SCI indicates the time-domain location, i.e., the specific slot index, of the "PSSCH+SL-PRS resource". However, terminal B is unaware of which symbols within the slot are used to transmit PSSCH and which symbols are used to transmit SL-PRS resource. In this case, third indication information is used for indicating the time-domain location occupied by PSSCH or indicating the time-domain location occupied by SL-PRS resource, thereby allowing terminal B to obtain the time-domain location of SL-PRS or PSSCH. Thus, the following two candidate schemes exist.

Candidate Scheme 1: The third indication information indicates that the second-level SCI contains the time-domain location of the SL-PRS resource; in this way, the terminal can determine the time-domain location of PSSCH based on the time-domain location of "PSSCH+SL PRS resource" in the first-level SCI.

Candidate Scheme 2: The third indication information indicates that the second-level SCI contains the time-domain location of the PSSCH; in this way, the terminal can determine the time-domain location of the SL PRS resource based on the time-domain location of "PSSCH+SL PRS resource" in the first-level SCI.

In an optional embodiment, the first control information includes the fifth indication information; correspondingly, the step 902 of receiving, according to the first control information, the PSSCH sent by the first terminal may include:
determining, based on the fifth indication information, the time-domain location of the PSSCH; and
receiving, based on the time-domain location of the PSSCH, the PSSCH sent by the first terminal.

In an optional embodiment, the first control information includes the fourth indication information or the sixth indication information; correspondingly, the step 902 of receiving, according to the first control information, the sidelink positioning reference signal SL-PRS sent by the first terminal may include:
determining the time-domain location of the SL-PRS resource based on the fourth indication information or the sixth indication information; and
receiving, based on the time-domain location of the SL-PRS resource, the SL-PRS sent by the first terminal.

In the information transmission method according to the embodiment of this disclosure, first control information sent by a first communication device is received; and a sidelink positioning reference signal (SL-PRS) and/or a physical sidelink shared channel (PSSCH) sent by a first terminal is received according to the first control information; wherein the first control information includes at least one of the following: first indication information for indicating the type of the second-level SCI; second indication information for indicating the relative relationship between the time-domain location of the SL-PRS resource and the time-domain location of the PSSCH; third indication information for indicating that the second-level SCI contains the time-domain location of the SL-PRS resource or indicating that the second-level SCI contains the time-domain location of the PSSCH; fourth indication information for indicating the time-domain location of the SL-PRS resource; fifth indication information for indicating a time-domain location of a PSSCH in the same slot as the SL-PRS resource; or sixth indication information for indicating the index of the SL-PRS resource, wherein the index of the SL-PRS resource is used for indicating the time-domain location of the SL-PRS resource. Thus, when the SL-PRS is transmitted in the shared resource pool, the terminal can correctly receive the SL-PRS through the time-domain location indication of the SL-PRS resource in the first control information, thereby completing the sidelink positioning.

As shown in Fig. 10, an embodiment of the present disclosure also provides a communication device. The communication device is a first communication device, and includes: a memory 1020, a transceiver 1000, and a processor 1010; the memory 1020 is used for storing program instructions; the transceiver 1000 is used for sending and receiving data and performing the following steps under the control of the processor 1010:
sending first control information to a second terminal, wherein the first control information includes at least one of the following:
first indication information for indicating a type of second-level sidelink control information (SCI);
second indication information for indicating a relative relationship between a time-domain location of an SL-PRS resource and a time-domain location of a physical sidelink shared channel (PSSCH);
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

In Fig. 10, the bus architecture may include any number of interconnected buses and bridges, specifically linking various circuits of one or more processors represented by processor 1010 and memory represented by memory 1020. The bus architecture may also link various other circuits such as peripheral devices, voltage regulators, and power management circuits, which are well known in the art and therefore will not be described further herein. The bus interface provides an interface. The transceiver 1000 may be multiple elements, including a transmitter and a receiver, to provide a unit for communicating with various other devices over a transmission medium, including a wireless channel, a wired channel, an optical fiber, and other transmission medium.

The processor 1010 is responsible for managing the bus architecture and general processing, while the memory 1020 can store data used by the processor 1010 when performing operations.

Optionally, the processor 1010 may be a central processing unit (CPU), an application-specific integrated circuit (ASIC), a field-programmable gate array (FPGA), or a complex programmable logic device (CPLD). The processor 1010 may also adopt a multi-core architecture.

When the communication device is the first terminal, for different user equipments, the use interface 1030 may also be an interface capable of connecting to a required device externally or internally. The connected device includes, but are not limited to, keypad, display, speaker, microphone, joystick, etc.

By calling program instructions stored in the memory, the processor 1010 is used for implementing any method according to the embodiments of this disclosure according to the obtained executable instructions. The processor 1010 and the memory 1020 may also be physically separated.

In some embodiments, the first indication information is a reserved field value of a first field in the first-level SCI, wherein the first field is used for indicating the format of the second-level SCI; or,
the first indication information is a reserved bit in a first format, wherein the first format is the existing format of the second-level SCI.

In some embodiments, in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

In some embodiments, the second-level SCI is used for indicating SL-PRS resource information.

In some embodiments, the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

In some embodiments, the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

In some embodiments, the fifth indication information is used for indicating:
an index of the last OFDM symbol occupied by this PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

In some embodiments, the index of the SL-PRS resource has a one-to-one correspondence with at least one of the following:
a quantity of OFDM symbols occupied by the SL-PRS resource;
an index of the first OFDM symbol occupied by the SL-PRS resource;
an index of the last OFDM symbol occupied by the SL-PRS resource; or
an offset between the first OFDM symbol occupied by the SL-PRS resource and a last OFDM symbol occupied by the PSSCH.

In some embodiments, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

In some embodiments, the first control information is carried by at least one of the following:
first-level SCI;
the second-level SCI;
downlink control information (DCI);
radio resource control (RRC) signaling; or
sidelink positioning protocol (SLPP) signaling.

In the communication device according to the embodiment of this disclosure, the first control information is sent to a second terminal, wherein the first control information includes at least one of the following: first indication information for indicating the type of the second-level SCI; second indication information for indicating the relative relationship between the time-domain location of the SL-PRS resource and the time-domain location of the PSSCH; third indication information for indicating that the second-level SCI contains the time-domain location of the SL-PRS resource or indicating that the second-level SCI contains the time-domain location of the PSSCH; fourth indication information for indicating the time-domain location of the SL-PRS resource; fifth indication information for indicating the time-domain location of the PSSCH in the same slot as the SL-PRS resource; or sixth indication information for indicating an index of the SL-PRS resource, wherein the index of the SL-PRS resource is used for indicating the time-domain location of the SL-PRS resource. Thus, when the SL-PRS is transmitted in the shared resource pool, the time-domain location indication of the SL-PRS resource in the first control information enables the terminal to correctly receive the SL-PRS, thereby completing the sidelink positioning.

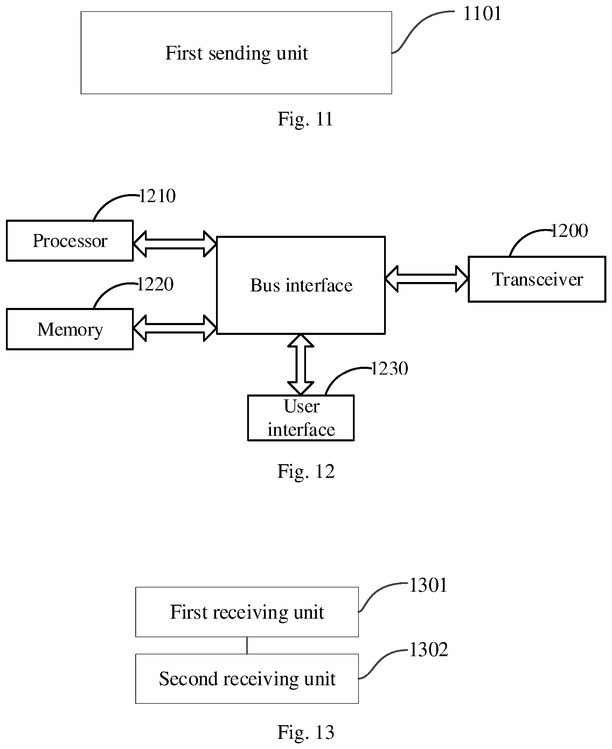

As shown in Fig. 11, an embodiment of the present disclosure also provides an information transmission apparatus, including:
a first sending unit 1101, configured to send first control information to a second terminal, wherein the first control information includes at least one of the following:
first indication information for indicating a type of second-level sidelink control information (SCI);
second indication information for indicating a relative relationship between a time-domain location of an SL-PRS resource and a time-domain location of a physical sidelink shared channel (PSSCH);
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

In some embodiments, the first indication information is a reserved field value of a first field in the first-level SCI; wherein the first field is used for indicating the format of the second-level SCI; or,
the first indication information is a reserved bit in a first format, wherein the first format is the existing format of the second-level SCI.

In some embodiments, in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

In some embodiments, the second-level SCI is used for indicating SL-PRS resource information.

In some embodiments, the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

In some embodiments, the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

In some embodiments, the fifth indication information is used for indicating:
an index of the last OFDM symbol occupied by this PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

In some embodiments, the index of the SL-PRS resource has a one-to-one correspondence with at least one of the following:
a quantity of OFDM symbols occupied by the SL-PRS resource;
an index of the first OFDM symbol occupied by the SL-PRS resource;
an index of the last OFDM symbol occupied by the SL-PRS resource; or
an offset between the first OFDM symbol occupied by the SL-PRS resource and a last OFDM symbol occupied by the PSSCH.

In some embodiments, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

In some embodiments, the first control information is carried by at least one of the following:
first-level SCI;
the second-level SCI;
downlink control information (DCI);
radio resource control (RRC) signaling; or
sidelink positioning protocol (SLPP) signaling.

In the information transmission apparatus according to the embodiment of this disclosure, the first control information is sent to a second terminal, wherein the first control information includes at least one of the following: first indication information for indicating the type of the second-level SCI; second indication information for indicating the relative relationship between the time-domain location of the SL-PRS resource and the time-domain location of the PSSCH; third indication information for indicating that the second-level SCI contains the time-domain location of the SL-PRS resource or indicating that the second-level SCI contains the time-domain location of the PSSCH; fourth indication information for indicating the time-domain location of the SL-PRS resource; fifth indication information for indicating the time-domain location of the PSSCH in the same slot as the SL-PRS resource; or sixth indication information for indicating an index of the SL-PRS resource, wherein the index of the SL-PRS resource is used for indicating the time-domain location of the SL-PRS resource. Thus, when the SL-PRS is transmitted in the shared resource pool, the time-domain location indication of the SL-PRS resource in the first control information enables the terminal to correctly receive the SL-PRS, thereby completing the sidelink positioning.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to related technologies, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, portable hard drives, read-only memory (ROM), random access memory (RAM), magnetic disks, or optical discs.

It should be noted that the apparatus according to the embodiment of this disclosure can implement all the method steps implemented in the above method embodiment and can achieve the same technical effect. Therefore, the parts and beneficial effects that are the same as those in the method embodiment will not be described in detail here.

In some embodiments of this disclosure, a processor-readable storage medium is also provided, the processor-readable storage medium storing program instructions, wherein the computer program is used for causing a processor to perform the following step:
sending first control information to a second terminal, wherein the first control information includes at least one of the following:
first indication information for indicating a type of second-level sidelink control information (SCI);
second indication information for indicating a relative relationship between a time-domain location of a sidelink positioning reference signal (SL-PRS) resource and a time-domain location of a physical sidelink shared channel (PSSCH);
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

When the program is executed by the processor, all the above-described methods performed by the communication device as shown in Fig. 2 can be implemented. To avoid repetition, these will not be described again here.

As shown in Fig. 12, an embodiment of the present disclosure also provides a terminal, which is a second terminal, and includes: a memory 1220, a transceiver 1200, and a processor 1210; the memory 1220 is used for storing a computer program; the transceiver 1200 is used for sending and receiving data and performing the following steps under the control of the processor 1210:
receiving first control information sent by a first communication device; and
receiving, according to the first control information, a sidelink positioning reference signal (SL-PRS) and/or a physical sidelink shared channel (PSSCH) sent by a first terminal;
wherein the first control information includes at least one of the following:
   first indication information for indicating a type of second-level sidelink control information (SCI);
   second indication information for indicating a relative relationship between a time-domain location of an SL-PRS resource and a time-domain location of the PSSCH;
   third indication information for indicating that the second-level SCI contains the time-domain location of the SL-PRS resource or indicating that the second-level SCI contains the time-domain location of the PSSCH;
   fourth indication information for indicating the time-domain location of the SL-PRS resource;
   fifth indication information for indicating a time-domain location of a PSSCH in the same slot as the SL-PRS resource; or
   sixth indication information for indicating an index of the SL-PRS resource, wherein the index of the SL-PRS resource is used for indicating the time-domain location of the SL-PRS resource.

In Fig. 12, the bus architecture may include any number of interconnected buses and bridges, specifically linking various circuits of one or more processors represented by processor 1210 and memory represented by memory 1220. The bus architecture may also link various other circuits such as peripheral devices, voltage regulators, and power management circuits, which are well known in the art and therefore will not be described further herein. The bus interface provides an interface. The transceiver 1200 may be multiple components, including a transmitter and a receiver, to provide a unit for communicating with various other devices over a transmission medium, including a wireless channel, a wired channel, an optical fiber, etc. For different user equipments, the user interface 1230 may also be an interface capable of connecting a required device externally or internally. The connected device includes but not limited to keypad, display, speaker, microphone, joystick, etc.

The processor 1210 is responsible for managing the bus architecture and general processing, and the memory 1220 can store the data used by the processor 1210 when performing operations.

Optionally, the processor 1210 can be a CPU, ASIC, FPGA. The processor 1210 may also adopt a multi-core architecture.

By calling program instructions stored in the memory, the processor 1210 is used for implementing any method according to the embodiments of this disclosure according to the obtained executable instructions. The processor 1210 and the memory 1220 may also be physically separated.

In some embodiments, the first indication information is a reserved field value of a first field in the first-level SCI; wherein the first field is used for indicating the format of the second-level SCI; or,
the first indication information is a reserved bit in a first format, wherein the first format is the existing format of the second-level SCI.

In some embodiments, in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

In some embodiments, the second-level SCI is used for indicating SL-PRS resource information.

In some embodiments, the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

In some embodiments, the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

In some embodiments, the fifth indication information is used for indicating:
an index of the last OFDM symbol occupied by this PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

In some embodiments, the index of the SL-PRS resource has a one-to-one correspondence with at least one of the following:
a quantity of OFDM symbols occupied by the SL-PRS resource;
an index of the first OFDM symbol occupied by the SL-PRS resource;
an index of the last OFDM symbol occupied by the SL-PRS resource; or
an offset between the first OFDM symbol occupied by the SL-PRS resource and a last OFDM symbol occupied by the PSSCH.

In some embodiments, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

In some embodiments, the transceiver 1200 is further used for:
receiving the first control information sent by the first communication device through at least one of the following:
first-level SCI;
the second-level SCI;
downlink control information (DCI);
radio resource control (RRC) signaling; or
sidelink positioning protocol (SLPP) signaling.

In some embodiments, the first control information includes the first indication information; the processor 1210 is further used for:
determining a type of the second-level SCI based on the first indication information;
determining a time-domain location of the SL-PRS resource based on the type of the second-level SCI; and
receiving, by means of the transceiver and based on the time-domain location of the SL-PRS resource, the SL-PRS sent by the first terminal.

In some embodiments, the first control information includes the second indication information and the third indication information; the processor 1210 is further used for:
determining, based on the second indication information, the third indication information, and first-level SCI, the time-domain location of the SL-PRS resource and/or the time-domain location of the PSSCH, wherein the first-level SCI is used for indicating the time-domain locations of the PSSCH and the SL-PRS resource;
the transceiver 1200 is further used for:
   receiving, based on the time-domain location of the SL-PRS resource, the SL-PRS sent by the first terminal, and/or receiving, based on the time-domain location of the PSSCH, the PSSCH sent by the first terminal.

In some embodiments, the first control information includes the fifth indication information; the processor 1210 is further used for:
determining, based on the fifth indication information, the time-domain location of the PSSCH; and
receiving, by means of the transceiver 1200 and based on the time-domain location of the PSSCH, the PSSCH sent by the first terminal.

In some embodiments, the first control information includes the fourth indication information or the sixth indication information; the processor 1210 is further used for:
determining the time-domain location of the SL-PRS resource based on the fourth indication information or the sixth indication information; and
receiving, by means of the transceiver 1200 and based on the time-domain location of the SL-PRS resource, the SL-PRS sent by the first terminal.

The terminal in this embodiment of the disclosure receives first control information sent by a first communication device; and according to the first control information, receives an SL-PRS and/or a PSSCH sent by the first terminal; wherein the first control information includes at least one of the following: first indication information for indicating the type of the second-level SCI; second indication information for indicating the relative relationship between the time-domain location of the SL-PRS resource and the time-domain location of the PSSCH; third indication information for indicating that the second-level SCI contains the time-domain location of the SL-PRS resource or indicating that the second-level SCI contains the time-domain location of the PSSCH; fourth indication information for indicating the time-domain location of the SL-PRS resource; fifth indication information for indicating a time-domain location of a PSSCH in the same slot as the SL-PRS resource; or sixth indication information for indicating the index of the SL-PRS resource, wherein the index of the SL-PRS resource is used for indicating the time-domain location of the SL-PRS resource. Thus, when the SL-PRS is transmitted in the shared resource pool, the terminal can correctly receive the SL-PRS through the time-domain location indication of the SL-PRS resource in the first control information, thereby completing the sidelink positioning.

As shown in Fig. 13, an embodiment of this disclosure further provides an information transmission apparatus, including:
a first receiving unit 1301, configured to receive first control information sent by a first communication device; and
a second receiving unit 1302, configured to receive, according to the first control information, a sidelink positioning reference signal (SL-PRS) and/or a physical sidelink shared channel (PSSCH) sent by a first terminal;
wherein the first control information includes at least one of the following:
   first indication information for indicating a type of second-level sidelink control information (SCI);
   second indication information for indicating a relative relationship between a time-domain location of an SL-PRS resource and a time-domain location of the PSSCH;
   third indication information for indicating that the second-level SCI contains the time-domain location of the SL-PRS resource or indicating that the second-level SCI contains the time-domain location of the PSSCH;
   fourth indication information for indicating the time-domain location of the SL-PRS resource;
   fifth indication information for indicating a time-domain location of a PSSCH in the same slot as the SL-PRS resource; or
   sixth indication information for indicating an index of the SL-PRS resource, wherein the index of the SL-PRS resource is used for indicating the time-domain location of the SL-PRS resource.

In some embodiments, the first indication information is a reserved field value of a first field in the first-level SCI; wherein the first field is used for indicating the format of the second-level SCI; or,
the first indication information is a reserved bit in a first format, wherein the first format is the existing format of the second-level SCI.

In some embodiments, in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

In some embodiments, the second-level SCI is used for indicating SL-PRS resource information.

In some embodiments, the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

In some embodiments, the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

In some embodiments, the fifth indication information is used for indicating:
an index of the last OFDM symbol occupied by this PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

In some embodiments, the index of the SL-PRS resource has a one-to-one correspondence with at least one of the following:
a quantity of OFDM symbols occupied by the SL-PRS resource;
an index of the first OFDM symbol occupied by the SL-PRS resource;
an index of the last OFDM symbol occupied by the SL-PRS resource; or
an offset between the first OFDM symbol occupied by the SL-PRS resource and a last OFDM symbol occupied by the PSSCH.

In some embodiments, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

In some embodiments, the first receiving unit 1301 is specifically configured to:
receive the first control information sent by the first communication device through at least one of the following:
first-level SCI;
the second-level SCI;
downlink control information (DCI);
radio resource control (RRC) signaling; or
sidelink positioning protocol (SLPP) signaling.

In some embodiments, the first control information includes the first indication information; the second receiving unit 1302 is specifically configured to:
determine the type of the second-level SCI based on the first indication information;
determine the time-domain location of the SL-PRS resource based on the type of the second-level SCI; and
receive, based on the time-domain location of the SL-PRS resource, the SL-PRS sent by the first terminal.

In some embodiments, the first control information includes the second indication information and the third indication information; the second receiving unit 1302 is specifically configured to:
determine, based on the second indication information, the third indication information, and first-level SCI, the time-domain location of the SL-PRS resource and/or the time-domain location of the PSSCH, wherein the first-level SCI is used for indicating the time-domain locations of the PSSCH and the SL-PRS resource; and
receive, based on the time-domain location of the SL-PRS resource, the SL-PRS sent by the first terminal, and/or receive, based on the time-domain location of the PSSCH, the PSSCH sent by the first terminal.

In some embodiments, the first control information includes the fifth indication information; the second receiving unit 1302 is specifically configured to:
determine, based on the fifth indication information, the time-domain location of the PSSCH; and
receive, based on the time-domain location of the PSSCH, the PSSCH sent by the first terminal.

In some embodiments, the first control information includes the fourth indication information or the sixth indication information; the second receiving unit 1302 is specifically configured to:
determine the time-domain location of the SL-PRS resource based on the fourth indication information or the sixth indication information; and
receive, based on the time-domain location of the SL-PRS resource, the SL-PRS sent by the first terminal.

The information transmission apparatus of this disclosure receives first control information sent by a first communication device; and according to the first control information, receives a sidelink positioning reference signal SL-PRS and/or a physical sidelink shared channel PSSCH sent by a first terminal. wherein the first control information includes at least one of the following: first indication information for indicating the type of the second-level SCI; second indication information for indicating the relative relationship between the time-domain location of the SL-PRS resource and the time-domain location of the PSSCH; third indication information for indicating that the second-level SCI contains the time-domain location of the SL-PRS resource or indicating that the second-level SCI contains the time-domain location of the PSSCH; fourth indication information for indicating the time-domain location of the SL-PRS resource; fifth indication information for indicating a time-domain location of a PSSCH in the same slot as the SL-PRS resource; or sixth indication information for indicating the index of the SL-PRS resource, wherein the index of the SL-PRS resource is used for indicating the time-domain location of the SL-PRS resource. Thus, when the SL-PRS is transmitted in the shared resource pool, the terminal can correctly receive the SL-PRS through the time-domain location indication of the SL-PRS resource in the first control information, thereby completing the sidelink positioning.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to related technologies, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, portable hard drives, read-only memory (ROM), random access memory (RAM), magnetic disks, or optical discs.

It should be noted that the apparatus according to the embodiment of this disclosure can implement all the method steps implemented in the above method embodiment and can achieve the same technical effect. Therefore, the parts and beneficial effects that are the same as those in the method embodiment will not be described in detail here.

In some embodiments of this disclosure, a processor-readable storage medium is also provided, the processor-readable storage medium storing program instructions, wherein the program instructions are used for causing a processor to perform the following steps:
receiving first control information sent by a first communication device; and
receiving, according to the first control information, a sidelink positioning reference signal (SL-PRS) and/or a physical sidelink shared channel (PSSCH) sent by a first terminal;
wherein the first control information includes at least one of the following:
   first indication information for indicating a type of second-level sidelink control information (SCI);
   second indication information for indicating a relative relationship between a time-domain location of an SL-PRS resource and a time-domain location of the PSSCH;
   third indication information for indicating that the second-level SCI contains the time-domain location of the SL-PRS resource or indicating that the second-level SCI contains the time-domain location of the PSSCH;
   fourth indication information for indicating the time-domain location of the SL-PRS resource;
   fifth indication information for indicating a time-domain location of a PSSCH in the same slot as the SL-PRS resource; or
   sixth indication information for indicating an index of the SL-PRS resource, wherein the index of the SL-PRS resource is used for indicating the time-domain location of the SL-PRS resource.

When the program is executed by the processor, it can implement all the above-described methods performed by the terminal as shown in Fig. 9. To avoid repetition, these will not be described again here.

The technical solution according to the embodiments of this disclosure is applicable to a variety of systems, especially 5G systems. For example, applicable systems may include Global System for Mobile communication (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), Long Term Evolution Advanced (LTE-A), Universal Mobile Telecommunication System (UMTS), Worldwide Interoperability for Microwave Access (WiMAX), and 5G New Radio (NR). All of these systems include a terminal device and a network device. The system may also include a core network component, such as the Evolved Packet System (EPS) or the 5G system (5GS).

The terminal device involved in the embodiments of this disclosure can be a device that provides voice and/or data connectivity to users, handheld device with wireless connectivity, or other processing device connected to a wireless modem. The names of the terminal device may differ in different systems; for example, in a 5G system, a terminal device can be called User Equipment (UE). Wireless terminal devices can communicate with one or more core networks (CNs) via a Radio Access Network (RAN). Wireless terminal devices can be mobile terminal devices, such as mobile phones (or "cellular" phones) and computers with mobile terminal devices, for example, portable, pocket-sized, handheld, computer-embedded, or vehicle-mounted mobile devices that exchange voice and/or data with the RAN. Examples include Personal Communication Service (PCS) phones, cordless phones, Session Initiated Protocol (SIP) phones, Wireless Local Loop (WLL) stations, and Personal Digital Assistants (PDAs). Wireless terminal device can also be referred to as a system, subscriber unit, subscriber station, mobile station, mobile, remote station, access point, remote terminal, access terminal, user terminal, user agent, or user equipment, but this disclosure is not limited to these terms.

The network device involved in the embodiments of this disclosure may be a base station, which may include multiple cells providing services to terminals. Depending on the specific application, the base station may also be called an access point, or a device in the access network that communicates with the wireless terminal device through one or more sectors on the air interface, or other names. The network device may be used to convert received air frames into Internet Protocol (IP) packets or vice versa, acting as a router between the wireless terminal device and the rest of the access network, which may include an Internet Protocol (IP) communication network. The network device may also coordinate the attribute management of the air interface. For example, the network equipment involved in this disclosure can be a base transceiver station (BTS) in Global System for Mobile communications (GSM) or Code Division Multiple Access (CDMA), or a NodeB in Wide-band Code Division Multiple Access (WCDMA). It can also be an evolved network device (eNB or e-NodeB) in a Long Term Evolution (LTE) system, a 5G base station (gNB) in a next-generation 5G network architecture, or a Home evolved Node B (HeNB), relay node, femto, pico, etc. This disclosure does not limit the scope of the network equipment involved. In some network architectures, network devices may include centralized unit (CU) nodes and distributed unit (DU) nodes, which may also be geographically separated.

Network devices and terminal devices can each use one or more antennas to perform multiple-input multiple-output (MIMO) transmission. MIMO transmission can be single-user MIMO (SU-MIMO) or multiple-user MIMO (MU-MIMO). Depending on the configuration and number of antenna combinations, MIMO transmission can be 2-dimensional MIMO (2D-MIMO), 3-dimensional MIMO (3D-MIMO), full-dimensional MIMO (FD-MIMO), or massive MIMO. It can also be diversity transmission, pre-coded transmission, or beamforming transmission, etc.

Those skilled in the art will understand that embodiments of this disclosure can be provided as methods, systems, or computer program products. Therefore, this disclosure can take the form of a completely hardware embodiment, a completely software embodiment, or an embodiment combining software and hardware aspects. Furthermore, this disclosure can take the form of a computer program product embodied on one or more computer-usable storage media (including, but not limited to, disk storage and optical storage) containing computer-usable program code.

This disclosure is described with reference to flowchart illustrations and/or block diagrams of methods, apparatus (systems), and computer program products according to embodiments of this disclosure. It will be understood that each block of the flowchart illustrations and/or block diagrams, and combinations of blocks in the flowchart illustrations and/or block diagrams, can be implemented by computer-executable instructions. These computer-executable instructions can be provided to a processor of a general-purpose computer, special-purpose computer, embedded processor, or other programmable data processing apparatus to produce a machine, such that the instructions, which are executed by the processor of the computer or other programmable data processing apparatus, create means for implementing the functions specified in one or more flowchart illustrations and/or one or more block diagrams.

These processor-executable instructions may also be stored in a processor-readable memory that can instruct a computer or other programmable data processing device to operate in a particular manner, such that the instructions stored in the processor-readable memory produce an article of manufacture including instruction means that implement the functions specified in one or more flowcharts and/or one or more block diagrams.

These processor-executable instructions can also be loaded onto a computer or other programmable data processing apparatus to cause a series of operational steps to be performed on the computer or other programmable apparatus to produce a computer-implemented process, such that the instructions, which are executed by the computer or other programmable apparatus, provide steps for implementing the functions specified in one or more flowcharts and/or one or more block diagrams.

It should be noted that the above division of modules is merely a logical functional division. In actual implementation, they can be fully or partially integrated into a single physical entity, or they can be physically separated. Furthermore, these modules can be implemented entirely in software via processing element calls; they can be fully implemented in hardware; or some modules can be implemented by processing element calls to software, while others are implemented in hardware. For example, a determination module can be a separate processing element, or it can be integrated into a chip in the aforementioned device. Alternatively, it can be stored as program code in the memory of the aforementioned device, and its function can be called and executed by a processing element of the device. The implementation of other modules is similar. Moreover, these modules can be fully or partially integrated together, or they can be implemented independently. The processing element mentioned here can be an integrated circuit with signal processing capabilities. In the implementation process, each step of the above method or each of the above modules can be completed through integrated logic circuits in the hardware of the processor element or through software instructions.

For example, each module, unit, subunit, or submodule can be one or more integrated circuits configured to implement the above methods, such as one or more application-specific integrated circuits (ASICs), one or more digital signal processors (DSPs), or one or more field-programmable gate arrays (FPGAs). As another example, when a module is implemented by a processing element scheduling program codes, the processing element can be a general-purpose processor, such as a central processing unit (CPU) or other processor capable of calling program codes. Furthermore, these modules can be integrated together to form a system-on-a-chip (SOC).

The terms "first", "second" and the like used in the specification and claims of this disclosure are used to distinguish similar objects and are not necessarily used to describe a specific order or sequence. It should be understood that such data can be interchanged where appropriate so that embodiments of this disclosure described herein may be implemented in orders other than those illustrated or described herein. Furthermore, the terms "including" and "having" and any variations thereof, are intended to cover non-exclusive inclusion; for example, a process, method, system, product, or apparatus that includes a series of steps or units is not necessarily limited to those steps or units explicitly listed, but may include other steps or units not explicitly listed or inherent to such processes, methods, products, or apparatus. Additionally, the use of "and /or" in the specification and claims indicates at least one of the connected objects, e.g., A and/or B and/or C indicating seven possibilities: A alone, B alone, C alone, and both A and B, both B and C, both A and C, and A, B, and C. Similarly, the use of "at least one of A or B" in this specification and claims should be understood as "A alone, B alone, or both A and B" .

Obviously, those skilled in the art can make various modifications and variations to this disclosure without departing from its spirit and scope. Therefore, if such modifications and variations fall within the scope of the claims of this disclosure and their equivalents, this disclosure is also intended to include such modifications and variations.

## Claims

1. An information transmission method, performed by a first communication device, comprising:
sending first control information to a second terminal, wherein the first control information comprises at least one of the following:
first indication information for indicating a type of second-level sidelink control information (SCI);
second indication information for indicating a relative relationship between a time-domain location of a sidelink positioning reference signal (SL-PRS) resource and a time-domain location of a physical sidelink shared channel (PSSCH);
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

2. The method according to claim 1, wherein the first indication information is a reserved field value of a first field in first-level SCI, the first field being used for indicating a format of the second-level SCI; or,
the first indication information is a reserved bit in a first format, the first format being an existing format of the second-level SCI.

3. The method according to claim 2, wherein,
in a case that the reserved bit in the first format is 0, a second-level SCI format 2-C is used for indicating inter-user coordination information;
in a case that the reserved bit in the first format is 1, the second-level SCI format 2-C is used for indicating SL PRS resource information.

4. The method according to claim 1 or 2, wherein the second-level SCI is used for indicating SL-PRS resource information.

5. The method according to any one of claims 1 to 3, wherein the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

6. The method according to any one of claims 1 to 3, wherein the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

7. The method according to any one of claims 1 to 3, wherein the fifth indication information is used for indicating:
an index of a last OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

8. The method according to any one of claims 1 to 3, wherein the index of the SL-PRS resource has a one-to-one correspondence with at least one of the following:
a quantity of OFDM symbols occupied by the SL-PRS resource;
an index of a first OFDM symbol occupied by the SL-PRS resource;
an index of a last OFDM symbol occupied by the SL-PRS resource; or
an offset between the first OFDM symbol occupied by the SL-PRS resource and a last OFDM symbol occupied by the PSSCH.

9. The method according to any one of claims 1 to 3, wherein, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

10. The method according to any one of claims 1 to 3, wherein the first control information is carried by at least one of the following:
first-level SCI;
the second-level SCI;
downlink control information (DCI);
radio resource control (RRC) signaling; or
sidelink positioning protocol (SLPP) signaling.

11. An information transmission method, performed by a second terminal, comprising:
receiving first control information sent by a first communication device; and
receiving, according to the first control information, a sidelink positioning reference signal (SL-PRS) and/or a physical sidelink shared channel (PSSCH) sent by a first terminal;
wherein the first control information comprises at least one of the following:
first indication information for indicating a type of second-level sidelink control information (SCI);
second indication information for indicating a relative relationship between a time-domain location of an SL-PRS resource and a time-domain location of the PSSCH;
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

12. The method according to claim 11, wherein the first indication information is a reserved field value of a first field in first-level SCI, the first field being used for indicating a format of the second-level SCI; or,
the first indication information is a reserved bit in a first format, the first format being an existing format of the second-level SCI.

13. The method according to claim 12, wherein,
in a case that the reserved bit in the first format is 0, a second-level SCI format 2-C is used for indicating inter-user coordination information;
in a case that the reserved bit in the first format is 1, the second-level SCI format 2-C is used for indicating SL PRS resource information.

14. The method according to claim 11 or 12, wherein the second-level SCI is used for indicating SL-PRS resource information.

15. The method according to any one of claims 11 to 13, wherein the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

16. The method according to any one of claims 11 to 13, wherein the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

17. The method according to any one of claims 11 to 13, wherein the fifth indication information is used for indicating:
an index of a last OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

18. The method according to any one of claims 11 to 13, wherein the index of the SL-PRS resource has a one-to-one correspondence with at least one of the following:
a quantity of OFDM symbols occupied by the SL-PRS resource;
an index of a first OFDM symbol occupied by the SL-PRS resource;
an index of a last OFDM symbol occupied by the SL-PRS resource; or
an offset between the first OFDM symbol occupied by the SL-PRS resource and a last OFDM symbol occupied by the PSSCH.

19. The method according to any one of claims 11 to 13, wherein, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

20. The method according to any one of claims 11 to 13, wherein receiving the first control information sent by the first communication device comprises:
receiving the first control information sent by the first communication device through at least one of the following:
first-level SCI;
the second-level SCI;
downlink control information (DCI);
radio resource control (RRC) signaling; or
sidelink positioning protocol (SLPP) signaling.

21. The method according to any one of claims 11 to 13, wherein the first control information comprises the first indication information;
the receiving, according to the first control information, the SL-PRS sent by the first terminal comprises:
determining a type of the second-level SCI based on the first indication information;
determining a time-domain location of the SL-PRS resource based on the type of the second-level SCI; and
receiving, based on the time-domain location of the SL-PRS resource, the SL-PRS sent by the first terminal.

22. The method according to any one of claims 11 to 13, wherein the first control information comprises the second indication information and the third indication information;
the receiving, according to the first control information, the SL-PRS and/or PSSCH sent by the first terminal comprises:
determining, based on the second indication information, the third indication information, and first-level SCI, the time-domain location of the SL-PRS resource and/or the time-domain location of the PSSCH, wherein the first-level SCI is used for indicating the time-domain locations of the PSSCH and the SL-PRS resource; and
receiving, based on the time-domain location of the SL-PRS resource, the SL-PRS sent by the first terminal, and/or receiving, based on the time-domain location of the PSSCH, the PSSCH sent by the first terminal.

23. The method according to claim 11, wherein the first control information comprises the fifth indication information;
the receiving, according to the first control information, the PSSCH sent by the first terminal comprises:
determining, based on the fifth indication information, the time-domain location of the PSSCH; and
receiving, based on the time-domain location of the PSSCH, the PSSCH sent by the first terminal.

24. The method according to claim 11, wherein the first control information comprises the fourth indication information or the sixth indication information;
the receiving, according to the first control information, the SL-PRS sent by the first terminal comprises:
determining the time-domain location of the SL-PRS resource based on the fourth indication information or the sixth indication information; and
receiving, based on the time-domain location of the SL-PRS resource, the SL-PRS sent by the first terminal.

25. A communication device, wherein the communication device is a first communication device, and comprises: a memory, a transceiver, and a processor; the memory being used for storing program instructions; and the transceiver being used for transmitting and receiving data and performing the following steps under the control of the processor:
sending first control information to a second terminal, wherein the first control information comprises at least one of the following:
first indication information for indicating a type of second-level sidelink control information (SCI);
second indication information for indicating a relative relationship between a time-domain location of a sidelink positioning reference signal (SL-PRS) resource and a time-domain location of a physical sidelink shared channel (PSSCH);
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

26. The communication device according to claim 25, wherein the first indication information is a reserved field value of a first field in first-level SCI, the first field being used for indicating a format of the second-level SCI; or,
the first indication information is a reserved bit in a first format, the first format being an existing format of the second-level SCI.

27. The communication device according to claim 26, wherein,
in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

28. The communication device according to claim 25 or 26, wherein the second-level SCI is used for indicating SL-PRS resource information.

29. The communication device according to any one of claims 25 to 27, wherein the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

30. The communication device according to any one of claims 25 to 27, wherein the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

31. The communication device according to any one of claims 25 to 27, wherein the fifth indication information is used for indicating:
an index of a last OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

32. The communication device according to any one of claims 25 to 27, wherein the index of the SL-PRS resource has a one-to-one correspondence with at least one of the following:
a quantity of OFDM symbols occupied by the SL-PRS resource;
an index of a first OFDM symbol occupied by the SL-PRS resource;
an index of a last OFDM symbol occupied by the SL-PRS resource; or
an offset between the first OFDM symbol occupied by the SL-PRS resource and a last OFDM symbol occupied by the PSSCH.

33. The communication device according to any one of claims 25 to 27, wherein, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

34. The communication device according to any one of claims 25 to 27, wherein the first control information is carried by at least one of the following:
first-level SCI;
the second-level SCI;
downlink control information (DCI);
radio resource control (RRC) signaling; or
sidelink positioning protocol (SLPP) signaling.

35. An information transmission apparatus, comprising:
a first sending unit, configured to send first control information to a second terminal, wherein the first control information comprises at least one of the following:
first indication information for indicating a type of second-level sidelink control information (SCI);
second indication information for indicating a relative relationship between a time-domain location of a sidelink positioning reference signal (SL-PRS) resource and a time-domain location of a physical sidelink shared channel (PSSCH);
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

36. The apparatus according to claim 35, wherein the first indication information is a reserved field value of a first field in first-level SCI, the first field being used for indicating a format of the second-level SCI; or,
the first indication information is a reserved bit in a first format, the first format being an existing format of the second-level SCI.

37. The apparatus according to claim 36, wherein,
in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

38. The apparatus according to claim 35 or 36, wherein the second-level SCI is used for indicating SL-PRS resource information.

39. The apparatus according to any one of claims 35 to 37, wherein the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

40. The apparatus according to any one of claims 35 to 37, wherein the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

41. The apparatus according to any one of claims 35 to 37, wherein the fifth indication information is used for indicating:
an index of a last OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

42. The apparatus according to any one of claims 35 to 37, wherein the index of the SL-PRS resource has a one-to-one correspondence with at least one of the following:
a quantity of OFDM symbols occupied by the SL-PRS resource;
an index of a first OFDM symbol occupied by the SL-PRS resource;
an index of a last OFDM symbol occupied by the SL-PRS resource; or
an offset between the first OFDM symbol occupied by the SL-PRS resource and a last OFDM symbol occupied by the PSSCH.

43. The apparatus according to any one of claims 35 to 37, wherein, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

44. The apparatus according to any one of claims 35 to 37, wherein the first control information is carried by at least one of the following:
first-level SCI;
the second-level SCI;
downlink control information (DCI);
radio resource control (RRC) signaling; or
sidelink positioning protocol (SLPP) signaling.

45. A terminal, the terminal being a second terminal, and comprising: a memory, a transceiver, and a processor; wherein the memory is used for storing program instructions; the transceiver is used for transmitting and receiving data and performing the following steps under the control of the processor:
receiving first control information sent by a first communication device; and
receiving, according to the first control information, a sidelink positioning reference signal (SL-PRS) and/or a physical sidelink shared channel (PSSCH) sent by a first terminal;
wherein the first control information comprises at least one of the following:
first indication information for indicating a type of second-level sidelink control information (SCI);
second indication information for indicating a relative relationship between a time-domain location of an SL-PRS resource and a time-domain location of the PSSCH;
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

46. The terminal according to claim 45, wherein the first indication information is a reserved field value of a first field in first-level SCI, the first field being used for indicating a format of the second-level SCI; or,
the first indication information is a reserved bit in a first format, the first format being an existing format of the second-level SCI.

47. The terminal according to claim 46, wherein,
in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

48. The terminal according to claim 45 or 46, wherein the second-level SCI is used for indicating SL-PRS resource information.

49. The terminal according to any one of claims 45 to 47, wherein the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

50. The terminal according to any one of claims 45 to 47, wherein the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

51. The terminal according to any one of claims 45 to 47, wherein the fifth indication information is used for indicating:
an index of a last OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

52. The terminal according to any one of claims 45 to 47, wherein the index of the SL-PRS resource has a one-to-one correspondence with at least one of the following:
a quantity of OFDM symbols occupied by the SL-PRS resource;
an index of a first OFDM symbol occupied by the SL-PRS resource;
an index of a last OFDM symbol occupied by the SL-PRS resource; or
an offset between the first OFDM symbol occupied by the SL-PRS resource and a last OFDM symbol occupied by the PSSCH.

53. The terminal according to any one of claims 45 to 47, wherein, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

54. The terminal according to any one of claims 45 to 47, wherein the transceiver is further configured to:
receive the first control information sent by the first communication device through at least one of the following:
first-level SCI;
the second-level SCI;
downlink control information (DCI);
radio resource control (RRC) signaling; or
sidelink positioning protocol (SLPP) signaling.

55. The terminal according to any one of claims 45 to 47, wherein the first control information comprises the first indication information;
the processor is further used for:
determining a type of the second-level SCI based on the first indication information;
determining a time-domain location of the SL-PRS resource based on the type of the second-level SCI; and
receiving, based on the time-domain location of the SL-PRS resource, the SL-PRS sent by the first terminal.

56. The terminal according to any one of claims 45 to 47, wherein the first control information comprises the second indication information and the third indication information;
the processor is further used for: determining, based on the second indication information, the third indication information, and first-level SCI, the time-domain location of the SL-PRS resource and/or the time-domain location of the PSSCH, wherein the first-level SCI is used for indicating the time-domain locations of the PSSCH and the SL-PRS resource;
the transceiver is further used for:
receiving, based on the time-domain location of the SL-PRS resource, the SL-PRS sent by the first terminal, and/or receiving, based on the time-domain location of the PSSCH, the PSSCH sent by the first terminal.

57. The terminal according to claim 45, wherein the first control information comprises the fifth indication information;
the processor is further used for:
determining, based on the fifth indication information, the time-domain location of the PSSCH; and
receiving, by means of the transceiver and based on the time-domain location of the PSSCH, the PSSCH sent by the first terminal.

58. The terminal according to claim 45, wherein the first control information comprises the fourth indication information or the sixth indication information;
the processor is further used for:
determining the time-domain location of the SL-PRS resource based on the fourth indication information or the sixth indication information; and
receiving, by means of the transceiver and based on the time-domain location of the SL-PRS resource, the SL-PRS sent by the first terminal.

59. An information transmission apparatus, comprising:
a first receiving unit, configured to receive first control information sent by a first communication device; and
a second receiving unit, configured to receive, according to the first control information, a sidelink positioning reference signal (SL-PRS) and/or a physical sidelink shared channel (PSSCH) sent by a first terminal;
wherein the first control information comprises at least one of the following:
first indication information for indicating a type of second-level sidelink control information (SCI);
second indication information for indicating a relative relationship between a time-domain location of an SL-PRS resource and a time-domain location of the PSSCH;
third indication information for indicating that the second-level SCI contains the time-domain location of the SL-PRS resource or indicating that the second-level SCI contains the time-domain location of the PSSCH;
fourth indication information for indicating the time-domain location of the SL-PRS resource;
fifth indication information for indicating a time-domain location of a PSSCH in the same slot as the SL-PRS resource; or
sixth indication information for indicating an index of the SL-PRS resource, wherein the index of the SL-PRS resource is used for indicating the time-domain location of the SL-PRS resource.

60. The apparatus according to claim 59, wherein the first indication information is a reserved field value of a first field in first-level SCI, the first field being used for indicating a format of the second-level SCI; or,
the first indication information is a reserved bit in a first format, the first format being an existing format of the second-level SCI.

61. The apparatus according to claim 60, wherein,
in a case that the reserved bit in the first format is 0, the second-level SCI format 2-C is used for indicating inter-user coordination information;
in a case that the reserved bit in the first format is 1, the second-level SCI format 2-C is used for indicating SL PRS resource information.

62. The apparatus according to claim 59 or 60, wherein the second-level SCI is used for indicating SL-PRS resource information.

63. The apparatus according to any one of claims 59 to 61, wherein the second indication information is used for indicating:
orthogonal frequency division multiplexing (OFDM) symbols occupied by the PSSCH in a slot are located before OFDM symbols occupied by the SL-PRS resource in the slot; or,
OFDM symbols occupied by the PSSCH in a slot are located after OFDM symbols occupied by the SL-PRS resource in the slot.

64. The apparatus according to any one of claims 59 to 61, wherein the fourth indication information is used for indicating:
an index of a first OFDM symbol occupied by the SL-PRS resource; or,
the index of the first OFDM symbol occupied by the SL-PRS resource, and a quantity of OFDM symbols occupied by the SL-PRS resource; or,
the index of the first OFDM symbol occupied by the SL-PRS resource, and an index of a last OFDM symbol occupied by the SL-PRS resource.

65. The apparatus according to any one of claims 59 to 61, wherein the fifth indication information is used for indicating:
an index of a last OFDM symbol occupied by the PSSCH; or,
an index of a first OFDM symbol occupied by the PSSCH, and a quantity of OFDM symbols occupied by the PSSCH; or,
the index of the first OFDM symbol occupied by the PSSCH, and the index of the last OFDM symbol occupied by the PSSCH.

66. The apparatus according to any one of claims 59 to 61, wherein the index of the SL-PRS resource has a one-to-one correspondence with at least one of the following:
a quantity of OFDM symbols occupied by the SL-PRS resource;
an index of a first OFDM symbol occupied by the SL-PRS resource;
an index of a last OFDM symbol occupied by the SL-PRS resource; or
an offset between the first OFDM symbol occupied by the SL-PRS resource and a last OFDM symbol occupied by the PSSCH.

67. The apparatus according to any one of claims 59 to 61, wherein, in a case that the index of the SL-PRS resource is used for indicating the time-domain location of the SL-PRS resource, the time-domain location of the SL-PRS resource is located after the time-domain location of the PSSCH, and an OFDM symbol immediately following the PSSCH is a first OFDM symbol of the SL-PRS resource.

68. The apparatus according to any one of claims 59 to 61, wherein the first receiving unit is specifically configured to:
receive the first control information sent by the first communication device through at least one of the following:
first-level SCI;
the second-level SCI;
downlink control information (DCI);
radio resource control (RRC) signaling; or
sidelink positioning protocol (SLPP) signaling.

69. The apparatus according to any one of claims 59 to 61, wherein the first control information comprises the first indication information;
the second receiving unit is specifically configured to:
determine a type of the second-level SCI based on the first indication information;
determine a time-domain location of the SL-PRS resource based on the type of the second-level SCI; and
receive, based on the time-domain location of the SL-PRS resource, the SL-PRS sent by the first terminal.

70. The apparatus according to any one of claims 59 to 61, wherein the first control information comprises the second indication information and the third indication information;
the second receiving unit is specifically configured to:
determine, based on the second indication information, the third indication information, and first-level SCI, the time-domain location of the SL-PRS resource and/or the time-domain location of the PSSCH, wherein the first-level SCI is used for indicating the time-domain locations of the PSSCH and the SL-PRS resource; and
receive, based on the time-domain location of the SL-PRS resource, the SL-PRS sent by the first terminal, and/or receive, based on the time-domain location of the PSSCH, the PSSCH sent by the first terminal.

71. The apparatus according to claim 59, wherein the first control information comprises the fifth indication information;
the second receiving unit is specifically configured to:
determine, based on the fifth indication information, the time-domain location of the PSSCH; and
receive, based on the time-domain location of the PSSCH, the PSSCH sent by the first terminal.

72. The apparatus according to claim 59, wherein the first control information comprises the fourth indication information or the sixth indication information;
the second receiving unit is specifically configured to:
determine the time-domain location of the SL-PRS resource based on the fourth indication information or the sixth indication information; and
receive, based on the time-domain location of the SL-PRS resource, the SL-PRS sent by the first terminal.

73. A processor-readable storage medium storing a computer program, wherein the computer program is used for causing a processor to perform the steps of the information transmission method according to any one of claims 1 to 10, or to perform the steps of the information transmission method according to any one of claims 11 to 24.
